(19) Europäisches Patentamt
European Patent Office
Office européen des brevets

(11) **EP 4 686 281 A1**

(12) **EUROPEAN PATENT APPLICATION**
published in accordance with Art. 153(4) EPC

(43) Date of publication:
28.01.2026 Bulletin 2026/05

(21) Application number: 24784034.1

(22) Date of filing: 14.03.2024

(51) International Patent Classification (IPC):
*H04W 72/02* (2009.01)

(52) Cooperative Patent Classification (CPC):
H04L 5/00; H04W 72/02; H04W 72/0446;
H04W 72/0453; H04W 72/25; H04W 72/40;
H04W 72/542; H04W 72/566

(86) International application number:
PCT/CN2024/081553

(87) International publication number:
WO 2024/207949 (10.10.2024 Gazette 2024/41)

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
GE KH MA MD TN

(30) Priority: 06.04.2023 CN 202310362638

(71) Applicant: CICT Connected and Intelligent
Technologies Co., Ltd.
Chongqing 400041 (CN)

(72) Inventors:
• LIU, Yanqiang
Chongqing 400041 (CN)
• ZHAO, Rui
Chongqing 400041 (CN)

(74) Representative: Penza, Giancarlo
Bugnion S.p.A.
Viale Lancetti, 17
20158 Milano (IT)

(54) **SIDELINK RESOURCE ALLOCATION METHOD AND APPARATUS, AND SIDELINK DEVICE AND MEDIUM**

(57) The present application relates to the technical field of communications. Provided are a sidelink resource allocation method and apparatus, and a sidelink device and a medium. The method, which is applied to a first sidelink device, comprises: determining a candidate resource set; and executing resource exclusion according to first information of a first wireless access module and/or second information of a second wireless access module, and the candidate resource set.

Fig. 2

201 A candidate resource set is determined

202 Resource exclusion is performed according to first information of a first radio access module and/or second information of a second radio access module, and the candidate resource set

**Description**

**Cross-Reference to Related Application**

The present application claims the priority of Chinese patent application no. 202310362638.9, filed in China on April 6, 2023, the disclosure of which is incorporated herein by reference in its entirety.

**Technical Field**

The present application relates to the technical field of communications, and in particular, to a method and apparatus for allocating sidelink resource, a sidelink device and a medium.

**Background**

In Rel-18, the coexistence of an LTE (Long Term Evolution, a 4G mobile communication network) sidelink (SL) and an NR (New Radio, a 5G mobile communication network) sidelink on the same channel is being studied. When adopting a dynamic resource pool sharing scheme, the resources used by NR SL User Equipment (UE) to transmit a Transport Block (TB) may be in the same sub-frame as the resources used by LTE SL UE to transmit a TB. When the Sub-Carrier Space (SCS) of the NR SL resource pool is greater than 15 kHz, one LTE SL sub-frame can contain multiple NR SL slots. In related art, the resource selection method in Rel-16/17 allows NR SL to transmit on any slot within a sub-frame. This may result in scenarios where NR SL transmission occurs only on slots other than the first slot, or where NR SL transmissions in the front and back slots within a sub-frame come from different NR SL Ues. This can cause the Automatic Gain Control (AGC)-adjusted Analog-to-Digital Converter (ADC) receive gain for LTE SL UEs receiving the sub-frame to be oversaturated for LTE SL transmissions in later slots, ultimately leading to LTE SL transmission reception failures and impacting the performance of the LTE SL system. To address this issue, it is necessary to restrict the NR SL to transmit at least in the first slot of a sub-frame, requiring improvements to the NR SL resource allocation method. However, there is currently no specific improvement scheme for the NR SL resource allocation method.

In addition, in the dynamic resource pool sharing of Rel-18 dual-module devices, the NR SL module can use information shared from the LTE SL module to avoid resources already indicated or periodically reserved by LTE SL. However, there is currently no specific scheme for implementing dynamic resource pool sharing between LTE SL and NR SL.

**Summary**

The objective of the present application is to provide a method and apparatus for allocating sidelink resource, a sidelink device and a medium, so as to solve the problem in the related art that dynamic resource pools of an **LTE** SL and an **NR** SL are shared.

According to a first aspect, in order to achieve the described objective, the embodiments of the present application provide a method for allocating sidelink resource, which is applied to a first sidelink device and includes:

determining a candidate resource set; and

performing resource exclusion according to first information of a first radio access module and/or second information of a second radio access module, and the candidate resource set.

According to a second aspect, in order to achieve the described objective, the embodiments of the present application provide an apparatus for allocating sidelink resource, which is applied to the first sidelink device and includes:

a first determination module configured to determine a candidate resource set; and

an excluding module, configured to perform resource exclusion according to first information of a first radio access module and/or second information of a second radio access module, and the candidate resource set.

According to a third aspect, in order to achieve the described objective, the embodiments of the present application provide a sidelink device, including: a processor, a memory and a program stored on the memory and capable of running on the processor, wherein the program, when executed by the processor, implements the steps of the method for allocating sidelink resource according to the first aspect.

According to a fourth aspect, in order to achieve the described objective, the embodiments of the present application provide a readable storage medium, storing a program, wherein the program, when being executed by the processor, implements the steps of the method for allocating sidelink resource according to the first aspect.

The beneficial effects of the technical solution of the present application are:

In the embodiments of the present application, a first sidelink device determines a candidate resource set, and executes resource exclusion by means of first information of a first radio access module and/or second information of a second radio access module and the candidate resource set, thereby realizing dynamic resource pool sharing between transmission conducted by means of a first physical channel structure and transmission conducted by means of a second physical channel structure.

**Brief Description of the Drawings**

Fig. 1 is a schematic diagram of a sensing window and a resource selection window for resource allocation of an NR SL mode-2;

Fig. 2 is a schematic flowchart of a method for allocating sidelink resource according to some embodiments of the present application;

Fig. 3 is a schematic diagram of determining a candidate resource set according to some embodiments of the present application;

Fig. 4 is a first schematic diagram of a first implementation according to some embodiments of the present application;

Fig. 5 is a second schematic diagram of the first implementation according to some embodiments of the present application;

Fig. 6 is a first schematic diagram of a second implementation according to some embodiments of the present application;

Fig. 7 is a second schematic diagram of the second implementation according to some embodiments of the present application;

Fig. 8 is a first schematic diagram of a third implementation according to some embodiments of the present application;

Fig. 9 is a second schematic diagram of the third implementation according to some embodiments of the present application;

Fig. 10 is a schematic diagram of performing resource exclusion on second candidate resources in a candidate resource set from which first candidate resources have been excluded according to some embodiments of the present application;

Fig. 11 is a first schematic diagram of determining a starting moment of a resource selection window according to some embodiments of the present application;

Fig. 12 is a second schematic diagram of determining a starting moment of a resource selection window according to some embodiments of the present application;

Fig. 13 is a first schematic diagram of an SLSS slot configuration of a first physical channel structure according to some embodiments of the present application;

Fig. 14 is a second schematic diagram of an SLSS slot configuration of a first physical channel structure according to some embodiments of the present application;

Fig. 15 is a third schematic diagram of an SLSS slot configuration of a first physical channel structure according to some embodiments of the present application;

Fig. 16 is a schematic diagram of determining fifth candidate resources according to some embodiments of the present application;

Fig. 17 is a schematic structural diagram of an apparatus for allocating sidelink resource according to some embodiments of the present application;

Fig. 18 is a schematic structural diagram of a sidelink device according to some embodiments of the present application.

**Detailed Description of the Embodiments**

To make the technical problems to be resolved, technical solutions, and advantages of the present application clearer, the following describes the present application in detail with reference to the accompanying drawings and specific embodiments.

In embodiments of the present application, it should be understood that, sequence numbers of the foregoing processes do not mean execution sequences. The execution sequences of the processes should be determined based on functions and internal logic of the processes, and should not be construed as any limitation on the implementation processes of embodiments of the present application.

Additionally, the terms "system" and "network" may be used interchangeably herein.

The terms "first", "second", and the like in the description and claims of this application are used to distinguish between similar objects, but are not necessarily used to describe a specific order or sequence. It should be understood that terms used in such a way are interchangeable under proper conditions, so that the embodiments of the present application can be implemented in an order different from the order shown or described herein. In addition, "first" and "second" are usually used to distinguish objects of a same type, and do not restrict a quantity of objects. For example, there may be one or a plurality of first objects. In addition, in the description and the claims, "and/or" represents at least one of the connected objects, and the character "/" usually indicates an "or" relationship between the associated objects.

In order to enable a person skilled in the art to better understand the embodiments of the present application, the following description will be given.

I. In Rel-18, the same channel may support three types of devices for service transmission, as follows:

Type A device: equipped with both a first radio access module (NR SL module) and a second radio access module (LTE SL module), wherein the LTE SL module can transmit shared information to the NR SL module by means of in-device interaction;

Type B device: equipped with only an NR SL module, or equipped with both an NR SL module and an LTE SL module, but the NR SL module cannot obtain shared information from the LTE SL module; and

Type C device: equipped with only an LTE SL module.

It should be noted that the NR SL module can perform sensing and transmission for the first physical channel structure (NR SL), but cannot perform sensing and transmission for the second physical channel structure (LTE SL).

The LTE SL module can perform sensing and transmission for LTE SL, but cannot perform sensing and transmission for NR SL.

It should be further noted that the first sidelink device in some embodiments of the present application is a Type A device or a Type B device.

II. NR SL mode-2 resource allocation method

NR SL mode-2 resource allocation adopts a distributed resource scheduling approach (i.e., the UE autonomously selects transmission resources). Since there is no centralized scheduling by a base station, the UE needs to determine the resource occupation status of other UEs by means f a sensing mechanism and select resources on the basis of the sensing result. The NR SL mode-2 resource selection process is as follows:

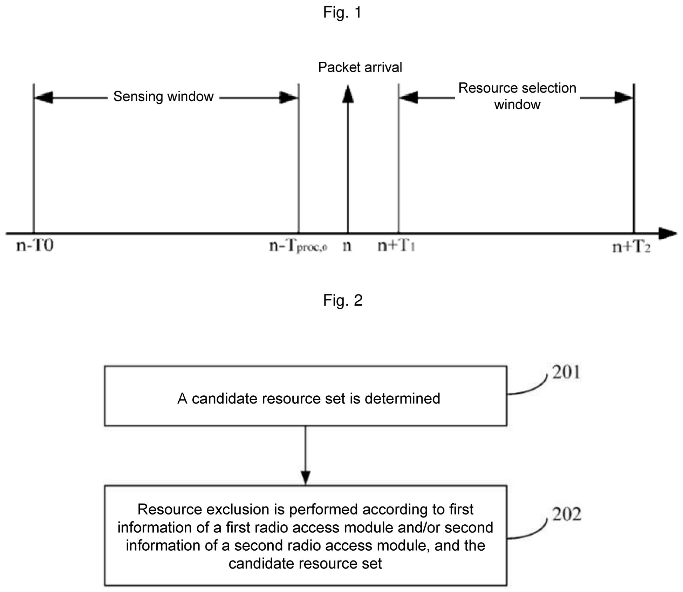

Step 1: the candidate single-slot resource $R_{x,y}$ is consecutive (x+j) subchannels on $t_y$ slots, j=0,..., $L_{subCH}$-1. The UE considers that any $L_{subCH}$ consecutive subchannels in the time range of $[n+T_1, n+T_2]$ in the corresponding resource pool are all candidate single-slot resources. Please refer to Fig. 1, Fig. 1 is a schematic diagram of a sensing window and a resource selection window for NR SL mode-2 resource allocation. As shown in Fig. 1, $0 \leq T_1 \leq T_{proc,1}$, $T_{proc,1}$

represents a sending processing delay of a UE (comprising sensing-based resource selection time, transmission preparation time of a physical sidelink control channel (PSCCH) and transmission preparation time of a physical sidelink shared channel (PSSCH)), the values may be {3, 5, 9, 17} physical slots (slots), which respectively correspond to SCS {15, 30, 60, 120} kHz, and when $T_{2min}$<remaining PDB, $T_{2min} \leq T_2 \leq$ remaining PDB is implemented depending on the UE; otherwise, $T_2$ is equal to remaining PDB. $T_{2min}$ is the minimum value of $T_2$ configured for the higher layer parameter t2min_SelectionWindow, and remaining PDB is a packet delay budget (PDB). The total number of candidate single-slot resources is $M_{total}$.

Step 2: the UE continuously monitors slots within the sensing window [n-$T_0$, n-$T_{proc,0}$) that belong to the corresponding resource pool, excluding the slots where its own transmission occurs. On the basis of the decoded Physical Sidelink Control Channel (PSCCH) and the Reference Signal Received Power (RSRP) measurement on the monitored slots, the following steps are performed. $T_0$ is a physical sensing window length configured by a higher layer, $T_{proc,0}$ is time of a sensing result before UE processing, and the value may be {1, 1, 2, 4} physical slots, which respectively correspond to SCS {15, 30, 60, 120} kHz.

Step 3: $Th(p_i, p_j)$ indicates an RSRP threshold corresponding to the $i^{th}$ RSRP domain in sl-ThresPSSCH-RSRP-List-r16, where i= $p_i$+($p_j$1)*8, $p_i$ represents the priority indicated in the received Sidelink Control Information (SCI), and $p_j$ represents the priority for sending the UE transmission, and $p_j$= $prio_{TX}$.

Step 4: $S_A$ is initialized as a set of all candidate single slot resources.

Step 5: If the candidate single-slot resource $R_{x,y}$ satisfies all the following conditions, the UE excludes the candidate single-slot resource $R_{x,y}$ from the set $S_A$:

    i. the UE does not monitor slot $t'^{SL}_m$ at Step 2;

    ii. For any period allowed by the higher-layer parameter sl-ResourceReservePeriodList, the UE considers that the SCI format 1-A is received on slot $t'^{SL}_m$; the "Resource reservation period" field of the SCI format 1-A is set to that period; and the SCI format 1-A indicates all subchannels in the slot in the resource pool, and satisfies the condition iii in Step 6.

Step 5a: If the number of candidate single-slot resources left in $S_A$ after exclusion is performed in Step 5 is less than X*$M_{total}$, $S_A$ is initialized as $S_A$ in Step 4.

Step 6: If the candidate single-slot resource $R_{x,y}$ satisfies all the following conditions, the UE excludes the candidate single-slot resource $R_{x,y}$ from the set $S_A$:

    i. the UE receives the SCI format 1-A on the slot $t'^{SL}_m$; and in the SCI format 1-A, the field "Resource reservation period" (if present) indicates the period value $P_{rsvp\_RX}$; and the field "Priority" indicates the priority $prio_{RX}$;

    ii. the RSRP measurement value corresponding to the received SCI format 1-A is higher than that of $Th(prio_{RX}, prio_{TX})$;

    iii. the UE receives the SCI format 1-A on the slot $t'^{SL}_m$, and if there is a field "Resource reservation period" in the SCI format 1-A, the UE considers that it has received the SCI format 1-A at $t'^{SL}_{m+q \times P'_{rsvp\_RX}}$ slot; and the resource blocks and slot determined by the received SCI format 1-A at the $t'^{SL}_{m+q \times P'_{rsvp\_RX}}$ slot overlap with the candidate single-slot resource corresponding to $R_{x,y+j \times P'_{rsvp\_TX}}$, where q = 1,2... Q; j=0, 1,..., $C_{resel}$-1; $P'_{rsvp\_RX}$ is a logical resource pool reservation period converted from $P_{rsvp\_RX}$, $P'_{rsvp\_TX}$ is a logical resource pool reservation period converted from $P_{rsvp\_TX}$, and $P_{rsvp\_TX}$ is a resource reservation period of the resource-selecting UE.

Step 7: if the number of remaining candidate single-slot resources in the $S_A$ is less than X*$M_{total}$, then the $Th(p_i, p_j)$ corresponding to each priority is increased by 3 dB and return to Step 4. For a given $prio_{TX}$, X is configured by the higher layer parameter sl-xPercentage($\text{prio}_{TX}$).

Step 8: The UE reports the $S_A$ to the higher layer.

Step 9: The higher layer randomly selects initial transmission and retransmission resources for the current TB in $S_A$, under the constraints of meeting HARQ RTT and/or retransmission indication requirement.

III. LTE SL and NR SL

The time domain configuration granularity of the LTE SL resource pool is a sub-frame, with a sub-frame length of 1ms; while the time domain configuration granularity of the NR SL resource pool is a slot, the length of which is related to the frequency domain SCS configuration, as shown in the example in Table 1.

Table 1

| Parameter u | SCS | The number of slots within one sub-frame |
|---|---|---|
| 0 | 15kHZ | 1 |
| 1 | 30kHZ | 2 |
| 2 | 60kHZ | 4 |
| 3 | 120kHZ | 8 |

Referring to Fig. 2, Fig. 2 is a schematic flowchart of a method for allocating sidelink resource according to some embodiments of the present application.
As shown in Fig. 2, the method is applied to a first sidelink device and includes the following steps:

step 201: a candidate resource set is determined; and

step 202: resource exclusion is performed according to first information of a first radio access module and/or second information of a second radio access module, and the candidate resource set.

In some embodiments of the present application, the first sidelink device is a Type A device or a Type B device.

(1) When the first sidelink device is the Type A device, the first sidelink device is equipped with both an NR SL module and an LTE SL module, and the NR SL module can acquire shared information of the LTE SL module; therefore, step 202 executed by the first sidelink device includes at least one of the following:

performing resource exclusion according to first information of a first radio access module and second information of a second radio access module, and the candidate resource set;

performing resource exclusion according to first information of a first radio access module and the candidate resource set; and

performing resource exclusion according to the second information of the second radio access module and the candidate set of resources.

(2) When the first sidelink device is the Type B device, only the NR SL module is included, or both the NR SL module and the LTE SL module are included, but the NR SL module cannot acquire the shared information of the LTE SL module; therefore, step 202 executed by the first sidelink device includes:
performing resource exclusion according to the first information of the first radio access module and the candidate resource set.

It should be noted that the method for determining the candidate resource set in step 201 can also be the method in step 1 and step 4 of the NR SL mode-2 resource allocation method in the conceptual description above. The candidate resource set in step 202 can also be: a candidate resource set obtained after performing the step of resource exclusion in Step 5 or Step 6 in the NR SL mode-2 resource allocation method described in the above conceptual description, can also be a candidate resource set determined in step 201, and can also be a candidate resource set obtained after performing resource exclusion method in some embodiments of the present application.

The concepts involved in the present application are illustrated as follows:

The physical channel structure corresponding to the NR SL module is a first physical channel structure (NR SL), and the physical channel structure corresponding to the LTE SL module is a second physical channel structure (LTE SL).

The first information of the NR SL module is sensing information of the NR SL module, and includes unmonitored slot information and sensed information sent by the NR SL module of the second sidelink device; the second information of the LTE SL module is shared information of the LTE SL module.

The NR SL resource pool is a first resource pool, and the LTE SL resource pool is a second resource pool.

In some embodiments of the present application, provided is a method for allocating sidelink resource applied to a first radio access module of a first terminal, including the following steps:

acquiring second information sent by a second radio access module;

determining a candidate resource set; and

performing resource exclusion according to first information of a first radio access module and second information, and the candidate resource set.

The first radio access module acquires the second information before performing resource selection.

In some embodiments of the present application, the second radio access module sends the second information to the first radio access module when acquiring the sharing request information of the first radio access module, or the second radio access module autonomously sends the second information to the first radio access module before the first radio access module performs resource selection.

By adopting the method for allocating sidelink resource of some embodiments of the present application, the first sidelink device can determine a candidate resource set and perform resource exclusion on the basis of the first information of the first radio access module and/or the second information of the second radio access module, and the candidate resource set, which enables dynamic resource pool sharing between transmissions using the first physical channel structure and transmissions using the second physical channel structure.

In some embodiments of the present application, Step 202 includes at least one of the following:

according to the first information of the first radio access module and/or the second information of the second radio access module, performing resource exclusion on first candidate resources in the candidate resource set; and

according to the first information of the first radio access module and/or the second information of the second radio access module, performing resource exclusion on second candidate resources in the candidate resource set from which the first candidate resources have been excluded.

It can be understood that, when performing resource exclusion according to the first information and/or the second information and the candidate resource set, resource exclusion can be performed on first candidate resources in the candidate resource set, and/or, further, resource exclusion can be performed on second candidate resources in the candidate resource set from which the first candidate resources have been excluded.

In some embodiments of the present application, step 201 includes one of the following:

the first item: determining a set of all candidate resources in a resource selection window as an initial candidate resource set;

performing resource exclusion on third candidate resources in the initial candidate resource set to obtain the candidate resource set; and

determining the total number of candidate resources according to the total number of all candidate resources in the candidate resource set;

the second item: determining a set of all candidate resources in the resource selection window as the candidate resource set;

determining the total number of candidate resources according to the total number of all candidate resources in the candidate resource set except the third candidate resources;

the third item: determining the total number of candidate resources according to the total number of all candidate resources in the resource selection window except the fourth candidate resources; and

determining a set of all candidate resources in the resource selection window except the fourth candidate resource as the candidate resource set, or determining a set of all candidate resources corresponding to the total number of candidate resources as the candidate resource set.

In some embodiments of the present application, the third candidate resources satisfy one of the following:

resources of a first slot of a target sub-frame where the third candidate resources are located are not in the candidate resource set;

resources of a first slot of a target sub-frame where the third candidate resources are located do not belong to a first resource pool;

resources in the same frequency domain as the first slot of the target sub-frame where the third candidate resources are located are not in the candidate resource set;

resources in the same frequency domain as the first slot of the target sub-frame where the third candidate resources are located do not belong to the first resource pool;

a sub-frame where the third candidate resources are located is a sidelink synchronization signal (SLSS) sub-frame of a second physical channel structure; and

a slot where the third candidate resources are located overlaps with an SLSS sub-frame of the second physical channel structure.

In some embodiments of the present application, the fourth candidate resources satisfy one of the following:

resources of a first slot of a target sub-frame where the fourth candidate resources are located are not in the resource selection window;

resources of the first slot of the target sub-frame where the fourth candidate resources are located do not belong to a first resource pool;

resources in the same frequency domain as the first slot of the target sub-frame where the fourth candidate resources are located are not in the resource selection window;

resources in the same frequency domain as the first slot of the target sub-frame where the fourth candidate resources are located do not belong to the first resource pool;

a sub-frame where the fourth candidate resources are located is a sidelink synchronization signal (SLSS) sub-frame of a second physical channel structure; and

a slot where the fourth candidate resources are located overlaps with an SLSS sub-frame of the second physical channel structure.

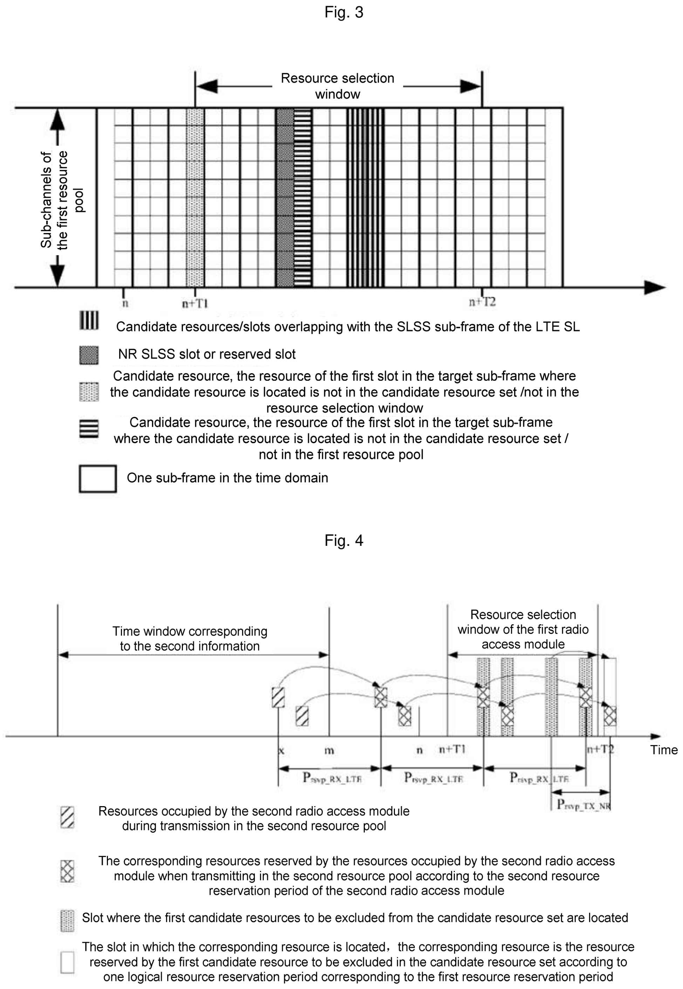

Fig. 3 is a schematic diagram of determining a candidate resource set according to some embodiments of the present application. In Fig. 3, the SCS of the second resource pool is 15 kHz (the resource granularity in the time domain is 1 sub-frame = 1 ms), and when the SCS configuration of the first resource pool is 30 kHz (the resource granularity in the time domain is 1 slot = 0.5 ms), one candidate resource occupies one subchannel. Some embodiments of the present application, in conjunction with Fig. 3 and the described three optional implementations, describe the first item, the second item, and the third item as follows.

The first item:

A set of all candidate resources (except the resources on the SLSS slot or the reserved slot marked with slash shadow in Fig. 3) in the resource selection window is determined as an initial candidate resource set.

The resources in the same frequency domain as the first slot of the target sub-frame where any third candidate resource (shown as dotted shadow in Fig. 3) is located are not in the initial candidate resource set, and thus need to be excluded from the initial candidate resource set to obtain the candidate resource set. Similarly, the resources in the same frequency domain as the first slot of the target sub-frame where any third candidate resource (shown as horizontal line shadow in Fig. 3) is located are resources in the NR SLSS slot, and are not in the initial candidate resource set or do not belong to the first resource pool. Therefore, they also need to be excluded from the initial candidate resource set to obtain the candidate resource set. Additionally, the sub-frame where any third candidate resource (shown as vertical line shadow in Fig. 3) is located is an SLSS sub-frame of LTE SL. Therefore, it also needs to be excluded from the initial candidate resource set to obtain the candidate resource set.

The total number of all candidate resources in the candidate resource set is taken as the total number of candidate resources $M_{total}$.

The second item:

a set of all candidate resources in the resource selection window is determined as the candidate resource set.

The total number of all the candidate resources in the candidate resource set except the following third candidate resources is taken as the total number $M_{total}$ of the candidate resources.

The resources in the same frequency domain as the first slot of the target sub-frame where any third candidate resource (shown as dotted shadow in Fig. 3) is located are not in the candidate resource set. Therefore, they cannot be counted as part of the total number of candidate resources. Similarly, the resources in the same frequency domain as the first slot of the target sub-frame where any third candidate resource (shown as horizontal line shadow in Fig. 3) is located are resources in the SLSS slot, and are not in the candidate resource set or do not belong to the first resource pool. Therefore, they cannot be counted as part of the total number of candidate resources. Additionally, the sub-frame where any third candidate resource (shown as vertical line shadow in Fig. 3) is located is an SLSS sub-frame of LTE SL. Therefore, it cannot be counted as part of the total number of candidate resources.

The third item:

the total number of all candidate resources in the resource selection window except the fourth candidate resources is taken as the total number $M_{total}$ of candidate resources. The resources in the same frequency domain as the first slot of the target sub-frame where any fourth candidate resource (shown as dotted shadow in Fig. 3) is located are not in the resource selection window. Therefore, they cannot be counted as part of the total number of candidate resources. Similarly, the resources in the same frequency domain as the first slot of the target sub-frame where any fourth candidate resource (shown as horizontal line shadow in Fig. 3) is located are resources in the SLSS slot, and are not in the resource selection window or do not belong to the first resource pool. Therefore, they cannot be counted as part of the total number of candidate resources. Additionally, the sub-frame where any fourth candidate resource (shown as vertical line shadow in Fig. 3) is located is an SLSS sub-frame of LTE SL. Therefore, it cannot be counted as part of the total number of candidate resources.

A set of all candidate resources in the resource selection window except the fourth candidate resource is determined as the candidate resource set, or a set of all candidate resources corresponding to the total number $M_{total}$ of candidate resources is determined as the candidate resource set. The resources in the same frequency domain as the first slot of the target sub-frame where any fourth candidate resource (shown as dotted shadow in Fig. 3) is located are not in the candidate resource set. Therefore, they cannot be counted as part of the candidate resources. Similarly, the resources in the same frequency domain as the first slot of the target sub-frame where any fourth candidate resource (shown as horizontal line shadow in Fig. 3) is located are resources in the SLSS slot, and are not in the candidate resource set or do not belong to the first resource pool.

Therefore, they cannot be counted as part of the candidate resources. Additionally, the sub-frame where any fourth candidate resource (shown as vertical line shadow in Fig. 3) is located is an SLSS sub-frame of LTE SL. Therefore, it cannot be counted as part of the candidate resources.

It should be noted that the target sub-frame satisfies at least one of the following:

the target sub-frame is a sub-frame where LTE SL transmission overlaps;

the target sub-frame is a sub-frame configured in the LTE SL resource pool; and

the target sub-frame is any sub-frame where a slot in the NR SL resource pool is located.

The flow of the first sidelink device performing resource allocation will be described in details below, including the following four solutions.

Solution I:

Step 1.1: a set of all candidate resources in the resource selection window is determined as the initial candidate resource set.

Step 1.2: third candidate resources that meet any of the following conditions are excluded from the initial candidate resource set to obtain the candidate resource set:

the resources in the first slot of the target sub-frame where the third candidate resources are located are not in the initial candidate resource set or do not belong to the first resource pool;

the resources in the same frequency domain as the first slot of the sub-frame where the third candidate resources are located are not in the initial candidate resource set or do not belong to the first resource pool;

the sub-frame where the third candidate resources are located is an SLSS sub-frame of an LTE SL;

the slot where the third candidate resources are located overlaps with an SLSS sub-frame of the LTE SL.

Step 1.3: the total number of all candidate resources in the candidate resource set is taken as the total number of candidate resources $M_{total}$.

Step 1.4: the first candidate resources are excluded from the candidate resource set according to the first information and/or the second information.

Step 1.5: second candidate resources that meet any of the following conditions are excluded from the candidate resource set:

the candidate resources in the same frequency domain as the first slot of the target sub-frame where the second candidate resources are located are not in the candidate resource set from which the first candidate resources have been excluded, or have already been excluded;

the second candidate resource is not contiguous with the candidate resources in the same frequency domain as the first slot of the target sub-frame where the second candidate resources are located.

Step 1.6: if the total number of the remaining candidate resources in the candidate resource set is less than $X*M_{total}$, then the RSRP threshold is increased, and return to Step 1.1 for determining the initial candidate resource set.

Solution II:

Step 2.1: a set of all candidate resources in the resource selection window is determined as the candidate resource set.

Step 2.2: the total number of all the candidate resources in the candidate resource set except the third candidate resources meeting one of the following conditions is taken as the total number $M_{total}$ of the candidate resources.

the resources in the first slot of the target sub-frame where the third candidate resources are located are not in the candidate resource set or do not belong to the first resource pool;

the resources in the same frequency domain as the first slot of the sub-frame where the third candidate resources are located are not in the candidate resource set or do not belong to the first resource pool;

the sub-frame where the third candidate resources are located is an SLSS sub-frame of an LTE SL;

the slot where the third candidate resources are located overlaps with an SLSS sub-frame of the LTE SL.

Step 2.3: the first candidate resources are excluded from the candidate resource set according to the first information and/or the second information.

Step 2.4: second candidate resources that meet any of the following conditions are excluded from the candidate resource set from which the first candidate resources have been excluded:

the candidate resources in the same frequency domain as the first slot of the target sub-frame where the second candidate resources are located are not in the candidate resource set from which the first candidate resources have been excluded, or have already been excluded;

the second candidate resource is not contiguous with the candidate resources in the same frequency domain as the first slot of the target sub-frame where the second candidate resources are located.

Step 2.5: if the total number of the remained candidate resources in the candidate resource set is less than $X*M_{total}$, then the RSRP threshold is increased, and return to Step 2.1 for determining the candidate resource set.

Solution III:

Step 3.1: the total number of all candidate resources in the resource selection window, other than the fourth candidate resources that meet one of the following conditions, is taken as the total number $M_{total}$ of candidate resources:

the resources of the first slot of the target sub-frame where the fourth candidate resources are located are not in the resource selection window, or do not belong to the resource pool;

the resources in the same frequency domain of the first slot of the sub-frame where the fourth candidate resources are located are not in the resource selection window or do not belong to the resource pool;

the sub-frame where the fourth candidate resources are located is an SLSS sub-frame of the LTE SL; and

the slot where the fourth candidate resources are located overlaps with an SLSS sub-frame of the LTE SL.

Step 3.2: a set of all candidate resources, other than the fourth candidate resources satisfying one of the following requirements, in the resource selection window is determined as a candidate resource set, or a set of all candidate resources corresponding to the total number $M_{total}$ of candidate resources is determined as a candidate resource set:

the resources of the first slot of the target sub-frame where the fourth candidate resources are located are not in the resource selection window, or do not belong to the resource pool;

the resources in the same frequency domain of the first slot of the sub-frame where the fourth candidate resources are located are not in the resource selection window or do not belong to the resource pool;

the sub-frame where the fourth candidate resources are located is an SLSS sub-frame of the LTE SL; and

the slot where the fourth candidate resources are located overlaps with an SLSS sub-frame of the LTE SL.

Step 3.3: the first candidate resources are excluded from the candidate resource set according to the first information and/or the second information.
Step 3.4: second candidate resources that meet any of the following conditions are excluded from the candidate resource set from which the first candidate resources have been excluded:

the candidate resources in the same frequency domain as the first slot of the target sub-frame where the second candidate resources are located are not in the candidate resource set from which the first candidate resources have been excluded, or have already been excluded;

the second candidate resource is not contiguous with the candidate resources in the same frequency domain as the first slot of the target sub-frame where the second candidate resources are located.

Step 3.5: if the total number of the remained candidate resources in the candidate resource set is less than $X*M_{total}$, then the RSRP threshold is increased, and return to Step 3.2 for determining the candidate resource set.

Solution IV:

Step 4.1: according to the standard in the related art, the total number of all candidate resources in the resource selection window is determined as the total number $M_{total}$ of candidate resources.
Step 4.2: according to the standard in the related art, a set of all candidate resources is determined as a candidate resource set.

Step 4.3: the first candidate resources are excluded from the candidate resource set according to the first information and/or the second information.

Step 4.4: second candidate resources that meet any of the following conditions are excluded from the candidate resource set from which the first candidate resources have been excluded:

the candidate resources in the same frequency domain as the first slot of the target sub-frame where the second candidate resources are located are not in the candidate resource set from which the first candidate resources have been excluded, or have already been excluded;

the second candidate resource is not contiguous with the candidate resources in the same frequency domain as the first slot of the target sub-frame where the second candidate resources are located.

Step 4.5: if the total number of the remained candidate resources in the candidate resource set is less than $X*M_{total}$, then the RSRP threshold is increased, and return to Step 4.2 for determining the candidate resource set.

Solution V:

Step 5.1: according to the standard in the related art, the total number of all candidate resources in the resource selection window is determined as the total number $M_{total}$ of candidate resources.

Step 5.2: according to the standard in the related art, a set of all candidate resources is determined as a candidate resource set.

Step 5.3: the first candidate resources are excluded from the candidate resource set according to the first information and/or the second information.

Step 5.4: if the total number of the remained candidate resources in the candidate resource set is less than $X*M_{total}$, then the RSRP threshold is increased, and return to Step 5.2 for determining the candidate resource set.

In some embodiments of the present application, the second information includes at least one of the following:

resource occupation information when the second radio access module transmits in the second resource pool;

unmonitored sub-frame information of the second radio access module;

sensing information of the second radio access module;

configuration information of the second resource pool;

a first target moment, the first target moment being a starting moment of a time window corresponding to the second information; and

a second target moment, the second target moment being an ending moment of a time window corresponding to the second information.

In some embodiments of the present application, the resource occupation information when the second radio access module transmits in the second resource pool includes at least one of the following:

a time-frequency position when the second radio access module transmits in the second resource pool;

a resource reservation period when the second radio access module transmits in the second resource pool;

a counter value of the second radio access module for resource selection includes an initial counter value and a current counter value.

In some embodiments of the present application, the sensing information of the second radio access module includes at least one of the following:

a time-frequency position for resource occupation of the second radio access module of the second sidelink device;

a resource reservation period for resource occupation of the second radio access module of the second sidelink device;

a resource reservation period correlation coefficient k for resource occupation of the second radio access module of the second sidelink device;

an RSRP measurement value corresponding to the resource occupation of the second radio access module of the second sidelink device;

a priority value corresponding to the resource occupation of the second radio access module of the second sidelink device.

It should be noted that when the second information includes the reservation period correlation coefficient k for the resource occupation of the second radio access module of the second sidelink device, the resource reservation period for the resource occupation of the second radio access module of the second sidelink device can be calculated on the basis of the reservation period correlation coefficient k and the parameter Pstep configured by the resource pool in the configuration information of the second resource pool.

In some embodiments of the present application, the configuration information of the second resource pool includes at least one of the following:

logic sub-frame information of a second resource pool;

subchannel configuration information;

SLSS configuration information;

reserved sub-frame information;

a resource reservation period of resource pool configuration;

Pstep of the resource pool configuration, the value of Pstep depending on TDD uplink and downlink configuration of the current cell.

It should be noted that the first sidelink device may acquire the configuration information of the second resource pool from the base station or by means of interaction between two radio access modules in the first sidelink device.

In some embodiments of the present application, the first candidate resources satisfy at least one of the following:

the first candidate resources or the sixth candidate resources overlap with first target resources in a time domain;

the first candidate resources or the sixth candidate resources overlap with the second target resources (in both time domain and frequency domain);

a slot where the first candidate resources are located or a first slot overlaps with a first target sub-frame in a time domain;

the first candidate resources or the sixth candidate resources overlap with the third target resources (in both time domain and frequency domain);

a slot where the first candidate resources are located or the first slot overlaps with a second target sub-frame in a time domain;

the first candidate resources or the sixth candidate resources overlap with the fourth target resources (in both time domain and frequency domain);

wherein the sixth candidate resources are resources of a $j^{th}$ first logic resource reservation period after the first candidate resources;

the first target resources are resources in which the first target resource occupation information reserves a first number of times in the second resource pool according to a second logical resource reservation period, the first number is a positive integer less than or equal to the first target value;

the second target resources are resources in which the second target resource occupation information reserves the first number of times in the second resource pool according to the second logical resource reservation period;

the third target resources are resources in which the resources composed of all subchannels on the target unmonitored sub-frame information reserves a second number of times in the second resource pool according to a third logical resource reservation period, the second number of times is a positive integer less than or equal to a second target value;

the fourth target resources are resources in which the target sensing information reserves a third number of times in the second resource pool according to a fourth logical resource reservation period, the third number of times is a positive integer less than or equal to a third target value;

the first target sub-frame is a sub-frame in which the sub-frame in which the first target resource occupation information is located is reserved for the first number of times in the second resource pool according to the second logical reservation period;

the second target sub-frame is a sub-frame in which target unmonitored sub-frame information is reserved for the second number of times in the second resource pool according to the third logical resource reservation period;

the first target resource occupation information is resource occupation information, in the second information, of the second radio access module during transmission in the second resource pool;

the second target resource occupation information is information of resources composed of all subchannels on a sub-frame where the first target resource occupation information is located;

the target unmonitored sub-frame information is unmonitored sub-frame information of the second radio access module in the second information;

the target sensing information is resource occupation information, in the sensing information of the second radio access module included in the second information, of the second radio access module of the second sidelink device;

the first logic resource reservation period corresponds to the first resource reservation period when the first radio access module of the first sidelink device transmits in the first resource pool;

the second logical resource reservation period corresponds to the second resource reservation period in the second information when the second radio access module transmits in the second resource pool;

the third logic resource reservation period is a logic resource reservation period corresponding to the third resource reservation period;

the third resource reservation period is any resource reservation period, in the second information, in the configuration information of the second resource pool;

the fourth logical resource reservation period is a logical resource reservation period corresponding to the fourth resource reservation period;

the fourth resource reservation period is the resource reservation period, in the sensing information of the second radio access module included in the second information, of the resource occupation of the second radio access module of the second sidelink device; and

the first slot is a slot of $j^{th}$ first logic reservation periods after a slot where the first candidate resource is located.

In some embodiments of the present application, the first target value satisfies one of the following: in cases where a first condition is satisfied, the first target value is determined on the basis of a ratio of the first time to the second resource reservation period or a ratio of the second time to the second logical resource reservation period; the first condition is that the second resource reservation period is less than first time, and a first moment minus a first logical sub-frame moment is less than or equal to the second logical resource reservation period.

$T_{scal}$ represents the first time, $T_{scal'}$ represents second time, and the first target value Q is represented as the following formula:

$$Q = \left\lceil \frac{T_{scal}}{second\ resource\ reservation\ period} \right\rceil ;$$

or ,

$$Q = \left\lceil \frac{T_{scal'}}{second\ logical\ resource\ reservation\ period} \right\rceil ;$$

or ,

$$Q = \left\lceil \frac{T_{scal}}{second\ resource\ reservation\ period} \right\rceil + 1 ;$$

or ,

$$Q = \left\lceil \frac{T_{scal'}}{second\ logical\ resource\ reservation\ period} \right\rceil + 1 ;$$

otherwise, Q=1 if the first condition is not satisfied.

In cases where a second condition is satisfied, the first target value is determined on the basis of a ratio of the first time to the second resource reservation period or a ratio of the second time to the second logical resource reservation period; the second condition is that the second resource reservation period is less than the first time, and the first moment minus the first logical sub-frame moment is less than or equal to the product of the first value and the second logical resource reservation period.

$T_{scal}$ represents the first time, $T_{scal'}$ represents second time, and the first target value Q is represented as the following formula:

$$Q = \left\lceil \frac{T_{scal}}{second\ resource\ reservation\ period} \right\rceil ;$$

or ,

$$Q = \left\lceil \frac{T_{scal'}}{second\ logical\ resource\ reservation\ period} \right\rceil ;$$

or ,

$$Q = \left\lceil \frac{T_{scal}}{second\ resource\ reservation\ period} \right\rceil + 1 ;$$

or ,

$$Q = \left\lceil \frac{T_{scal}'}{\text{second logical resource reservation period}} \right\rceil + 1 \; ;$$

Otherwise, Q=1 if the second condition is not satisfied.

When a third condition is satisfied, the first target value is equal to a current counter value for the second radio access module to perform resource selection; the third case is as follows: the logical sub-frame moment corresponding to the time-domain position of the resources occupied by the transmission of the second radio access module, plus the product of the current counter value for the resource selection of the transmission of the second radio access module and the second logical resource reservation period, is greater than or equal to the logical sub-frame moment b. When the sub-frame where the resource selection window ends is located belongs to the logic sub-frame of the second physical channel structure, the logical sub-frame moment b is a logical sub-frame moment of a second physical channel structure corresponding to the sub-frame where the resource selection window ending moment is located, otherwise, the logical sub-frame moment b is a logical sub-frame moment corresponding to the first logic sub-frame that belongs to the second physical channel structure before a sub-frame where the resource selection window ends.

Otherwise, Q is determined according to the first condition or the second condition, and Q=1 when the first condition or the second condition is not satisfied.

When a fourth condition is satisfied, the first target value is equal to a current counter value for the second radio access module to perform resource selection; the fourth condition is as follows: the physical sub-frame moment of the time-domain position of the resources occupied by the transmission of the second radio access module, plus the product of the current counter value of the resource selection for the transmission of the second radio access module and the second resource reservation period, is greater than or equal to the ending moment of the resource selection window.

Otherwise, Q is determined according to the first condition or the second condition, and Q=1 when the first condition or the second condition is not satisfied.

The second target value satisfies one of the following:

In cases where a fifth condition is satisfied, the second target value is determined on the basis of a ratio of the first time to the third resource reservation period or a ratio of the second time to the third logical resource reservation period. The fifth condition is that the third resource reservation period is less than first time, and a first moment minus a second logical sub-frame moment is less than or equal to the third logical resource reservation period.

$T_{scal}$ represents the first time, $T_{scal}'$ represents second time, and the second target value Q is represented as the following formula:

$$Q = \left\lceil \frac{T_{scal}}{\text{third resource reservation period}} \right\rceil \; ;$$

or ,

$$Q = \left\lceil \frac{T_{scal}'}{\text{third logical resource reservation period}} \right\rceil \; ;$$

or ,

$$Q = \left\lceil \frac{T_{scal}}{\text{third resource reservation period}} \right\rceil + 1 \; ;$$

or ,

$$Q = \left\lceil \frac{T_{scal}'}{\text{third logical resource reservation period}} \right\rceil + 1 \, ;$$

Otherwise, Q=1 if the fifth condition is not satisfied.

In cases where a sixth condition is satisfied, the second target value is determined on the basis of a ratio of the first time to the third resource reservation period or a ratio of the second time to the third logical resource reservation period. The sixth condition is that the third resource reservation period is less than the first time, and the first moment minus the second logical sub-frame moment is less than or equal to the product of the first value and the third logical resource reservation period.

$T_{scal}$ represents the first time, $T_{scal}'$ represents second time, and the second target value Q is represented as the following formula:

$$Q = \left\lceil \frac{T_{scal}}{\text{third resource reservation period}} \right\rceil \, ;$$

or ,

$$Q = \left\lceil \frac{T_{scal}'}{\text{third logical resource reservation period}} \right\rceil \, ;$$

or ,

$$Q = \left\lceil \frac{T_{scal}}{\text{third resource reservation period}} \right\rceil + 1 \, ;$$

or ,

$$Q = \left\lceil \frac{T_{scal}'}{\text{third logical resource reservation period}} \right\rceil + 1 \, ;$$

Otherwise, Q=1 if the sixth condition is not satisfied.

The third target value satisfies one of the following:

In cases where a seventh condition is satisfied, the third target value is determined on the basis of a ratio of the first time to the fourth resource reservation period or a ratio of the second time to the fourth logical resource reservation period. The seventh condition is that the fourth resource reservation period is less than first time, and a first moment minus a third logical sub-frame moment is less than or equal to the fourth logical resource reservation period.

$T_{scal}$ represents the first time, $T_{scal}'$ represents second time, and the third target value Q is represented as the following formula:

$$Q = \left\lceil \frac{T_{scal}}{\text{fourth resource reservation period}} \right\rceil \, ;$$

or ,

$$Q = \left\lceil \frac{T_{scal}'}{\text{fourth logical resource reservation period}} \right\rceil ;$$

or,

$$Q = \left\lceil \frac{T_{scal}}{\text{fourth resource reservation period}} \right\rceil + 1 ;$$

or,

$$Q = \left\lceil \frac{T_{scal}'}{\text{fourth logical resource reservation period}} \right\rceil + 1 ;$$

Otherwise, Q=1 if the seventh condition is not satisfied.

In cases where an eighth condition is satisfied, the third target value is determined on the basis of a ratio of the first time to the fourth resource reservation period or a ratio of the second time to the fourth logical resource reservation period. The eighth condition is that the fourth resource reservation period is less than the first time, and the first moment minus the third logical sub-frame moment is less than or equal to the product of the first value and the fourth logical resource reservation period.

$T_{scal}$ represents the first time, $T_{scal}'$ represents second time, and the third target value Q is represented as the following formula:

$$Q = \left\lceil \frac{T_{scal}}{\text{fourth resource reservation period}} \right\rceil ;$$

or,

$$Q = \left\lceil \frac{T_{scal}'}{\text{fourth logical resource reservation period}} \right\rceil ;$$

or,

$$Q = \left\lceil \frac{T_{scal}}{\text{fourth resource reservation period}} \right\rceil + 1 ;$$

or,

$$Q = \left\lceil \frac{T_{scal}'}{\text{fourth logical resource reservation period}} \right\rceil + 1 ;$$

Otherwise, Q=1 if the eighth condition is not satisfied.

The first logical sub-frame moment is a logical sub-frame moment corresponding to the time domain position of resource occupation information of a second radio access module in the second information;

the second logical sub-frame moment is a logical sub-frame moment, in the second information, corresponding to the unmonitored sub-frame information of the second radio access module;

the third logical sub-frame moment is a logical sub-frame moment, in sensing information of the second radio access module included in the second information, corresponding to the time domain position of resource occupation information of the second radio access module of the second sidelink device.

In some embodiments of the present application, the first time satisfies one of the following:

the first time is time obtained by converting the size of the resource selection window of the first radio access module into milliseconds;

the first time is a time difference obtained by subtracting the sub-frame moment where the second target slot is located from the sub-frame moment where the first target slot is located;

the first time is time in milliseconds obtained by converting the time difference between the sub-frame moment where the first target slot is located and the second target moment of the second information;

the second time satisfies one of the following:

the second time is the total time of logical sub-frames, belonging to the second physical channel structure, among all sub-frames where the slots between the second target slot and the first target slot are located;

the second time is the total time of logical sub-frames, belonging to the second physical channel structure, among all sub-frames between the sub-frame moment where the second target slot is located and the sub-frame moment where the first target slot is located;

the second time is the total time of logical sub-frames, belonging to the second physical channel structure, among all sub-frames between the second target moment in the second information and the sub-frame moment where the first target slot is located;

the first target slot (n+T2) is the ending time of the resource selection window of the first radio access module;

the second target slot (n) is a moment when the first sidelink device triggers the allocation of the first physical channel structure resources; and

the second target moment is an ending sub-frame of the time window corresponding to the second information.

In some embodiments of the present application, the first moment is determined according to one of the following:

in cases where the sub-frame where the second target slot is located belongs to a logical sub-frame of the second physical channel structure, the first moment is the logical sub-frame moment of the second physical channel structure corresponding to the sub-frame where the second target slot is located;

in cases where the sub-frame where the second target slot is located does not belong to a logical sub-frame of the second physical channel structure, the first moment is the logical sub-frame moment of the first logical sub-frame belonging to the second physical channel structure after the sub-frame where the second target slot is located, or the first moment is the logical sub-frame moment of the first logical sub-frame belonging to the second physical channel structure after the second target slot;

the first moment is a logical sub-frame moment of a first logic sub-frame belonging to the second physical channel structure after the second target moment;

the first moment is a logical sub-frame moment of a first logic sub-frame belonging to the second physical channel structure after a third target moment;

the third target moment is the latest moment when the first radio access module receives the second information, or the target moment is the earliest moment of the second target moment;

the first value is determined according to at least one of the following:

the second target moment;

the second resource reservation period;

the third resource reservation period;

the fourth resource reservation period; and

a moment when the first radio access module receives the second information.

The following describes the first candidate resources with reference to three specific implementations.

Implementation I:

with regard to "the first candidate resources or the sixth candidate resources overlap with first target resources in a time domain;

the first candidate resources or the sixth candidate resources overlap with second target resources;

a slot where the first candidate resources are located or a first slot overlaps with a first target sub-frame in a time domain".

The position of one first candidate resource (a candidate single-slot resource) is $R_{a,c}$ (a is the frequency-domain position of the first candidate resource, and c is the time-domain position of the first candidate resource), and a sixth candidate resource corresponding to the first candidate resource after j pieces of $P'_{rxvp\_TX\_NR}$ in the first resource pool is

$R_{a,c+j*P'_{rxvp\_TX\_NR}}$ , (j=0, 1, ..., $C_{resel}$ - 1), or the slot where one first candidate resource is located is $t_c$, and the first slot corresponding to $t_c$ after j pieces of $P'_{rxvp\_TX\_NR}$ in the first resource pool is $t_{c+j*P'_{rxvp\_TX\_NR}}$ (j=0, 1, ..., $C_{resel}$ - 1).

$P'_{rxvp\_TX\_NR}$ is a first logic resource reservation period mapped from a first resource reservation period to a first resource pool;
$C_{resel}$ is configured by a higher layer.

According to the resource occupation information when the second radio access module transmits in the second resource pool, the time-domain position of the resource occupied by the second radio access module is a physical sub-frame x, and the corresponding first target sub-frame reserved in the second resource pool according to the second resource reservation period is $t_{x'+q*P'_{rxvp\_RX\_LTE}}$  (q is a first number of times, and q = 1, 2... Q); or,

according to the resource occupation information of the second radio access module during transmission in the second resource pool, the second target resources reserved by the resource in the second resource pool according to the second logical resource reservation period are resources composed of all sub-channels on

$t_{x'+q*P'_{rxvp\_RX\_LTE}}$  (q is the first number of times, q =1, 2... Q), and the resource is composed of all sub-channels on the physical sub-frame x in which resources occupied by the second radio access module are located when transmitting in the second resource pool; or,

according to the resource occupation information of the second radio access module during transmission in the second resource pool, the resource occupied by the second radio access module is the resource at the corresponding frequency position on the physical sub-frame x; when the second radio access module performs transmission in the second resource pool, the corresponding first target resource is reserved in the second resource pool according to the second resource reservation period as a resource in the same frequency domain on $t_{x'+q*P'_{rxvp\_RX\_LTE}}$  (q is the first number of times, q = 1, 2... Q);

wherein x is the sub-frame position of the resources occupied by the second radio access module during transmission in the second resource pool;

x' is the logical sub-frame to which the physical sub-frame x is mapped in the second resource pool;

$P'_{rxvp\_RX\_LTE}$ is the second logical resource reservation period mapped to the second resource pool from the second resource reservation period.

when the resources $R_{a,c+j*P'_{rxvp\_TX\_NR}}$ and $t_{x'+q*P'_{rxvp\_RX\_LTE}}$ overlap in the time domain, the first candidate resource $R_{a,c}$ is excluded; or,

when there is a time-domain overlap between the resource $R_{a,c+j*P'_{rxvp\_TX\_NR}}$ and the same frequency domain resource reserved by the second radio access module on $t_{x'+q*P'_{rxvp\_RX\_LTE}}$, the first candidate resources $R_{a,c}$ is excluded; or,

when $R_{a,c+j*P'_{rxvp\_TX\_NR}}$ overlaps in both time domain and frequency domain with the resources composed of all subchannels on $t_{x'+q*P'_{rxvp\_RX\_LTE}}$, the first candidate resources $R_{a,c}$ is excluded; or,

when the slot $t_{c+j*P'_{rxvp\_TX\_NR}}$ overlaps with the sub-frame $t_{x'+q*P'_{rxvp\_RX\_LTE}}$ in the time domain, all candidate resources on the slot $t_c$ are excluded.

As shown in Fig. 4, the SCS of the first physical channel structure is 15kHz (the resource granularity in the time domain is 1 slot = 1ms), the SCS of the second physical channel structure is 15kHz (the resource granularity in the time domain is 1 sub-frame = 1ms), Q = 3, and when overlap occurs, the time domains are completely overlapped. In Fig. 4, $P_{rxvp\_RX\_LTE}$ is a second resource reservation period; and $P_{rxvp\_TX\_NR}$ is a first resource reservation period.

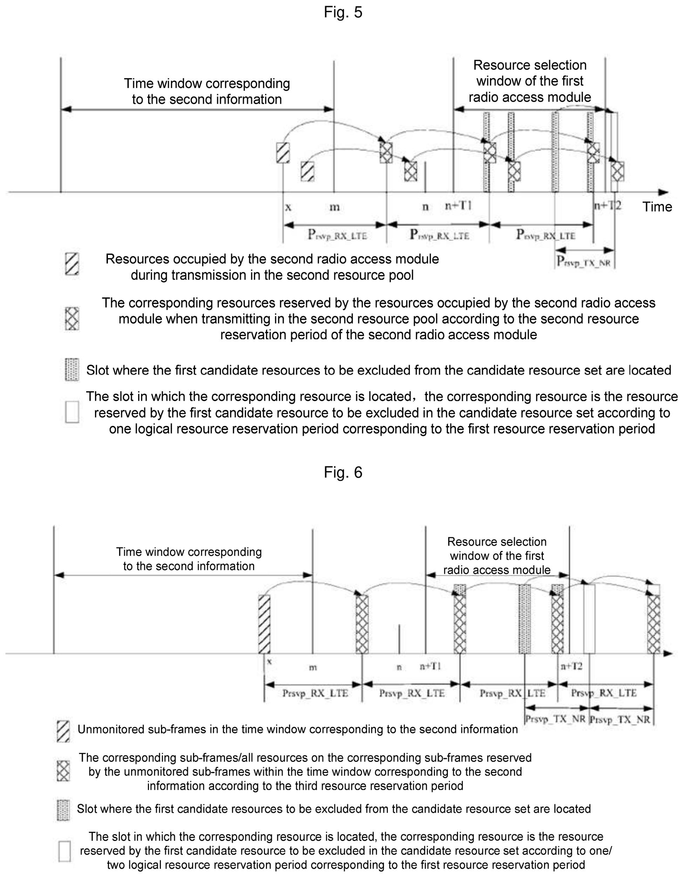

As shown in Fig. 5, the SCS of the first physical channel structure is 30kHz (the resource granularity in the time domain is 1 slot = 0.5ms), the SCS of the second physical channel structure is 15kHz (the resource granularity in the time domain is 1 sub-frame = 1ms), Q = 3, and when overlap occurs, the time domains are partially overlapped. In Fig. 5, $P_{rxvp\_RX\_LTE}$ is a second resource reservation period; and $P_{rxvp\_TX\_NR}$ is a first resource reservation period.

In Figs. 4 and 5, the first target value satisfies the second condition, and the second condition is as follows: the second resource reservation period is less than the first time, and the first moment minus the first logical sub-frame moment is less than or equal to the product of the first value and the second logical resource reservation period.

Herein, $T_{scal}$ represents first time, and the first value p and the first target value Q are expressed as follows:

$$p = \left\lceil \frac{\text{subframe where a second target slot is located} - \text{subframe where a second target moment is located}}{\text{second resource reservation period}} \right\rceil + 1 = 2;$$

$$Q = \left\lceil \frac{T_{scal}}{\text{second resource reservation period}} \right\rceil = 3.$$

$T_{scal}$ is obtained by subtracting a second target moment from a sub-frame where a second target slot (n) is located; the second target slot is a moment when the first sidelink device triggers the allocation of the first physical channel structure resource; and the second target moment is an ending sub-frame (m) of a time window corresponding to the second information.

In cases where the sub-frame where the second target slot is located belongs to a logical sub-frame of the second physical channel structure, the first moment is the logical sub-frame moment of the second physical channel structure corresponding to the sub-frame where the second target slot is located;

in cases where the sub-frame where the second target slot is located does not belong to a logical sub-frame of the second physical channel structure, the first moment is the logical sub-frame moment of the first logical sub-frame belonging to the second physical channel structure after the sub-frame where the second target slot is located, or the first moment is the logical sub-frame moment of the first logical sub-frame belonging to the second physical channel structure after the second target slot.

Implementation II:

With regard to "the first candidate resources or the sixth candidate resources overlap with the third target resources;
a slot where the first candidate resources are located or the first slot overlaps with a second target sub-frame in a time domain".

The position of one first candidate resource (a candidate single-slot resource) is $R_{a,c}$ (a is the frequency-domain position of the first candidate resource, and c is the time-domain position of the first candidate resource), and a sixth candidate resource corresponding to the first candidate resource after j pieces of $P'_{rxvp\_TX\_NR}$ in the first resource pool is

$$R_{a,c+j*P'_{rxvp\_TX\_NR}}$$ (j=0, 1, ..., $C_{resel}$ - 1),, or the slot where one first candidate resource is located is $t_c$, and the first slot corresponding to $t_c$ after j pieces of $P'_{rxvp\_TX\_NR}$ in the first resource pool is $$t_{c+j*P'_{rxvp\_TX\_NR}}$$ (j=0, 1, ..., $C_{resel}$ - 1).

$P'_{rxvp\_TX\_NR}$ is a first logic resource reservation period mapped from a first resource reservation period to a first resource pool;
$C_{resel}$ is configured by a higher layer.

When x is the time-domain position of the resource composed of all subchannels on the unmonitored sub-frame of the second radio access module, the corresponding resource reserved by x in the second resource pool according to the third resource reservation period configured by the second resource pool is a resource composed of all subchannels on

$$t_{x'+q*P'_{rxvp\_RX\_LTE}}$$ (q is the second number of times, and q = 1, 2...Q); or,

when x is the position of the unmonitored sub-frame of the second radio access module, the corresponding sub-frame reserved by x in the second resource pool according to the third resource reservation period configured by the second resource pool is $$t_{x'+q*P'_{rxvp\_RX\_LTE}}$$ (q is the second number of times, and q = 1, 2... Q),

wherein, x' is the logical sub-frame to which the physical sub-frame x is mapped in the second resource pool;

$P'_{rxvp\_RX\_LTE}$ is the third logical resource reservation period in which the third resource reservation period is mapped to the second resource pool.

when the resource $$R_{a,c+j*P'_{rxvp\_TX\_NR}}$$ overlaps with the resource composed of all subchannels on the sub-frame

$$t_{x'+q*P'_{rxvp\ RX\ LTE}}$$, the first candidate resource $R_{a,c}$ is excluded; or,

when the slot $$t_{c+j*P'_{rxvp\_TX\_NR}}$$ overlaps with the sub-frame $$t_{x'+q*P'_{rxvp\_RX\_LTE}}$$ in the time domain, all candidate resources on the slot $t_c$ are excluded.

As shown in Fig. 6, the SCS of the first physical channel structure is 15kHz (the resource granularity in the time domain is 1 slot = 1ms), the SCS of the second physical channel structure is 15kHz (the resource granularity in the time domain is 1 sub-frame = 1ms), Q = 4, and when overlap occurs, the time domains are completely overlapped. In Fig. 6, $P'_{xwp\_RX\_LTE}$ is any resource reservation period configured in the second resource pool; and $P'_{xvp\_TX\_NR}$ is the first resource reservation period.

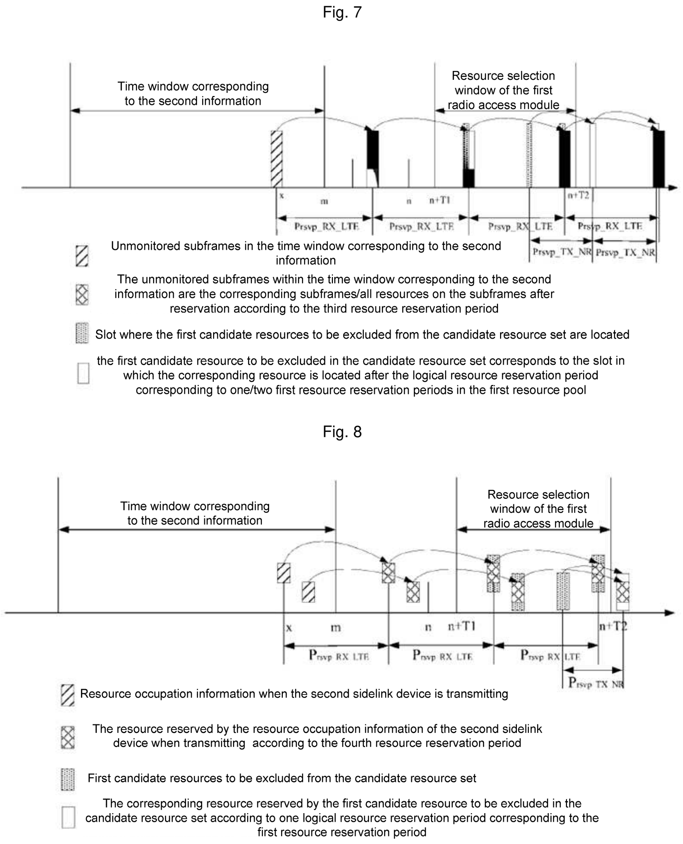

As shown in Fig. 7, the SCS of the first physical channel structure is 30kHz (the resource granularity in the time domain is 1 slot = 0.5ms), the SCS of the second physical channel structure is 15kHz (the resource granularity in the time domain is 1 sub-frame = 1ms), Q = 4, and when overlap occurs, the time domains are partially overlapped. In Fig. 7, $P'_{xvp\_RX\_LTE}$ is any resource reservation period configured in the second resource pool; and $P'_{xvp\_TX\_NR}$ is the first resource reservation period.

In Figs. 6 and 7, the second target value satisfies the sixth condition, and the sixth condition is as follows: the third resource reservation period is less than the first time, and the first moment minus the second logical sub-frame moment is less than or equal to the product of the first value and the third logical resource reservation period.

Herein, $T_{scal}$ represents first time, and the first value p and the second target value Q are expressed as follows:

$$p = \left\lceil \frac{\text{subframe where a second target slot is located} - \text{subframe where a second}}{\text{third resource reservation period}} \right\rceil + 1 = 2;$$

$$Q = \left\lceil \frac{T_{scal}}{\text{third resource reservation period}} \right\rceil = 4.$$

$T_{scal}$ is obtained by subtracting a second target moment from a sub-frame where a second target slot (n) is located; the second target slot is a moment when the first sidelink device triggers the allocation of the first physical channel structure resource; and the second target moment is an ending sub-frame (m) of a time window corresponding to the second information.

In cases where the sub-frame where the second target slot is located belongs to a logical sub-frame of the second physical channel structure, the first moment is the logical sub-frame moment of the second physical channel structure corresponding to the sub-frame where the second target slot is located;

in cases where the sub-frame where the second target slot is located does not belong to a logical sub-frame of the second physical channel structure, the first moment is the logical sub-frame moment of the first logical sub-frame belonging to the second physical channel structure after the sub-frame where the second target slot is located, or the first moment is the logical sub-frame moment of the first logical sub-frame belonging to the second physical channel structure after the second target slot.

Implementation III:

With regard to "the first candidate resources or the sixth candidate resources overlap with fourth target resources".

The position of one first candidate resource (a candidate single-slot resource) is $R_{a,c}$ (a is the frequency-domain position of the first candidate resource, and c is the time-domain position of the first candidate resource), and a sixth candidate resource corresponding to the first candidate resource after j pieces of $P'_{rxvp\_TX\_NR}$ in the first resource pool is

$R_{a,c+j*P'_{rxvp\_TX\_NR}}$ (j=0, 1, ..., $C_{resel}$ - 1).

$P'_{rxvp\_TX\_NR}$ is a first logic resource reservation period mapped from a first resource reservation period to a first resource pool;

$C_{resel}$ is configured by a higher layer.

The resource occupied by the second radio access module of the second sidelink device during transmission in the second resource pool is the resource at the corresponding frequency-domain position on physical sub-frame x. The corresponding fourth target resource, which is reserved in the second resource pool on the basis of the second resource reservation period, is the resource at the same frequency-domain position on $t_{x'+q*P'_{rxvp\_RX\_LTE}}$ (q is the third number of times, and q = 1, 2, ..., Q), wherein x is the sub-frame position of the resource occupied when the second sidelink device performs transmission;

x' is the logical sub-frame to which the physical sub-frame x is mapped in the second resource pool;

$P'_{rxvp\_RX\_LTE}$ is the fourth logical resource reservation period mapped to the second resource pool from the fourth resource reservation period.

When the resource $R_{a,c+j*P'_{rxvp\_TX\_NR}}$ overlaps with the resource reserved by the second radio access module of the second sidelink device on $t_{x'+q*P'_{rxvp\_RX\_LTE}}$ in the same frequency domain, the first candidate resource

$R_{a,c}$ is excluded.

As shown in Fig. 8, the SCS of the first physical channel structure is 15kHz (the resource granularity in the time domain is 1 slot = 1ms), the SCS of the second physical channel structure is 15kHz (the resource granularity in the time domain is 1 sub-frame = 1ms), Q = 3, and when overlap occurs, the time domains are partially overlapped. In Fig. 8, $P_{rxvp\_RX\_LTE}$ is a resource reservation period of the second sidelink device; $P_{rxvp\_TX\_NR}$ is a first resource reservation period.

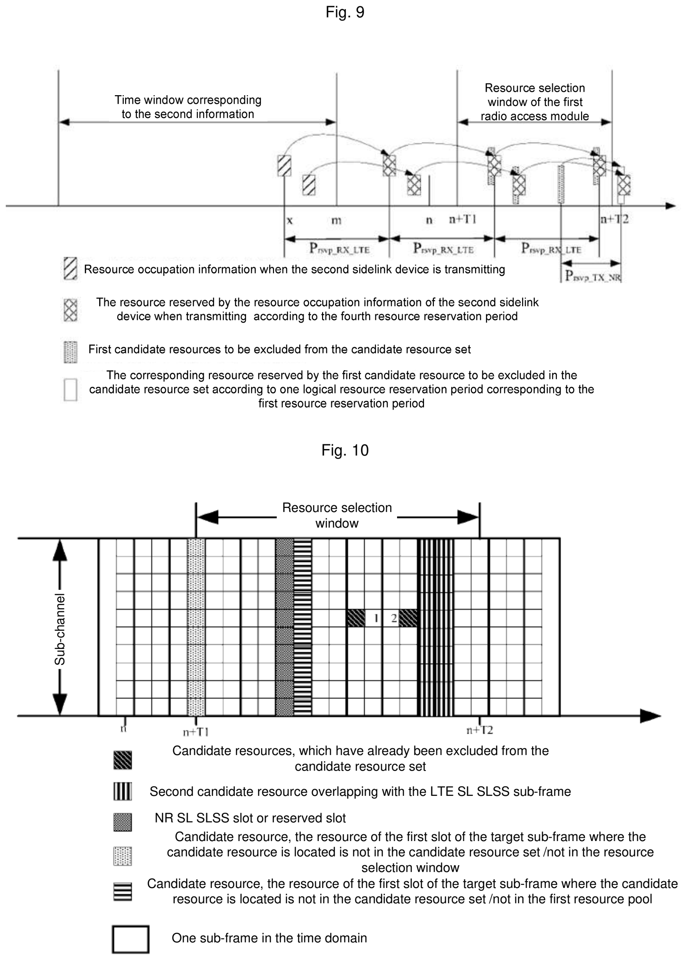

As shown in Fig. 9, the SCS of the first physical channel structure is 30kHz (the resource granularity in the time domain is 1 slot = 1ms), the SCS of the second physical channel structure is 15kHz (the resource granularity in the time domain is 1 sub-frame = 1ms), Q = 3, and when overlap occurs, the time domains are partially overlapped. In Fig. 9, $P_{rxvP\_RX\_LTE}$ is a resource reservation period of the second sidelink device; $P_{rxvP\_TX\_NR}$ is a first resource reservation period.

In Figs. 8 and 9, the third target value satisfies the eighth condition, and the eighth condition is as follows: the fourth resource reservation period is less than the first time, and the first moment minus the third logical sub-frame moment is less than or equal to the product of the first value and the fourth logical resource reservation period.

Herein, $T_{scal}$ represents first time, and the first value p and the third target value Q are expressed as follows:

$$p = \left\lceil \frac{\text{subframe where a second target slot is located} - \text{subframe where a second target moment is located}}{\text{fourth resource reservation period}} \right\rceil + 1 = 2;$$

$$Q = \left\lceil \frac{T_{scal}}{\text{fourth resource reservation period}} \right\rceil = 3.$$

$T_{scal}$ is obtained by subtracting a second target moment from a sub-frame where a second target slot (n) is located; the second target slot is a moment when the first sidelink device triggers the allocation of the first physical channel structure resource; and the second target moment is an ending sub-frame (m) of a time window corresponding to the second information.

In cases where the sub-frame where the second target slot is located belongs to a logical sub-frame of the second physical channel structure, the first moment is the logical sub-frame moment of the second physical channel structure corresponding to the sub-frame where the second target slot is located;

in cases where the sub-frame where the second target slot is located does not belong to a logical sub-frame of the second physical channel structure, the first moment is the logical sub-frame moment of the first logical sub-frame belonging to the second physical channel structure after the sub-frame where the second target slot is located, or the first moment is the logical sub-frame moment of the first logical sub-frame belonging to the second physical channel structure after the second target slot.

It should be noted that, because the NR SL supports a higher SCS, and the time domain resource granularity may be equal to or smaller than that of the LTE SL, resources may be completely overlapped or partially overlapped in the time domain.

In some embodiments of the present application, the second candidate resource satisfies at least one of the following:

the resources in the same frequency domain as the first slot of the target sub-frame where the second candidate resources are located are not included in the candidate resource set from which the first candidate resources have been excluded;

the resources in the same frequency domain as the first slot of the target sub-frame where the second candidate resources are located have been excluded;

the second candidate resources are not contiguous with the resources in the same frequency domain as the first slot of the target sub-frame where the second candidate resources are located;

a sub-frame where the second candidate resources are located is a sidelink synchronization signal (SLSS) sub-frame of a second physical channel structure; and

a slot where the second candidate resources are located overlaps with an SLSS sub-frame of the second physical channel structure.

Fig. 10 is a schematic diagram of performing resource exclusion on second candidate resources in a candidate resource set from which first candidate resources have been excluded according to some embodiments of the present application. In Fig. 10, the SCS of the second resource pool is 15 kHz (the resource granularity in the time domain is 1 sub-frame = 1 ms), and when the SCS configuration of the first resource pool is 30 kHz (the resource granularity in the time domain is 1 slot = 0.5 ms), one candidate resource occupies one subchannel. The embodiment of the present application specifically describes, with reference to Fig. 10, a procedure of "performing resource exclusion on second candidate resources in a candidate resource set from which first candidate resources have been excluded", which includes the following two conditions.

Condition 1:

After the first sidelink device performing resource exclusion on the first candidate resources in the candidate resource set according to the first information of the first radio access module and/or the second information of the second radio access module, as shown in Fig. 10, the resources in the same frequency domain as the first slot of the target sub-frame where any second candidate resource (shown as dotted shading in Fig. 10) is located are not in the candidate resource set, and thus need to be excluded from the candidate resource set; Similarly, the resources in the same frequency domain as the first slot of the target sub-frame where any second candidate resource (shown as horizontal line shadow in Fig. 10) is located are resources in the NR SLSS slot, and are not in the candidate resource set, and thus need to be excluded from the candidate resource set. Additionally, the sub-frame where any second candidate resource (shown as vertical line shadow in Fig. 10) is located is an SLSS sub-frame of LTE SL. Therefore, it also needs to be excluded from the candidate resource set.

For example, in Fig. 10, the resources in the same frequency domain as the first slot of the target sub-frame where the second candidate resource 1 is located have been excluded from the candidate resource set. Therefore, the second candidate resource 1 needs to be excluded from the candidate resource set. In contrast, the candidate resource 2 does not need to be excluded.

Condition 2:

When the third candidate resources or the fourth candidate resources are no longer in the candidate resource set (as indicated by the dotted, horizontal, or vertical shadows in Fig. 10), the first sidelink device performs resource exclusion on the first candidate resources in the candidate resource set on the basis of the first information of the first radio access module and/or the second information of the second radio access module. For example, in Fig. 10, the resource in the same frequency domain as the first slot of the target sub-frame where the second candidate resource 1 is located has already been excluded from the candidate resource set. Therefore, the second candidate resource 1 needs to be excluded from the candidate resource set. In contrast, the candidate resource 2 does not need to be excluded.

In some embodiments of the present application, before Step 201, the method further includes: determining a starting moment of the resource selection window, the starting moment of the resource selection window satisfying the following condition:
when the starting moment of the resource selection window belongs to the first resource pool, the starting moment of the resource selection window is the first slot of one sub-frame; otherwise, the first slot belonging to the first resource pool after the starting moment of the resource selection window is the first slot of one sub-frame.

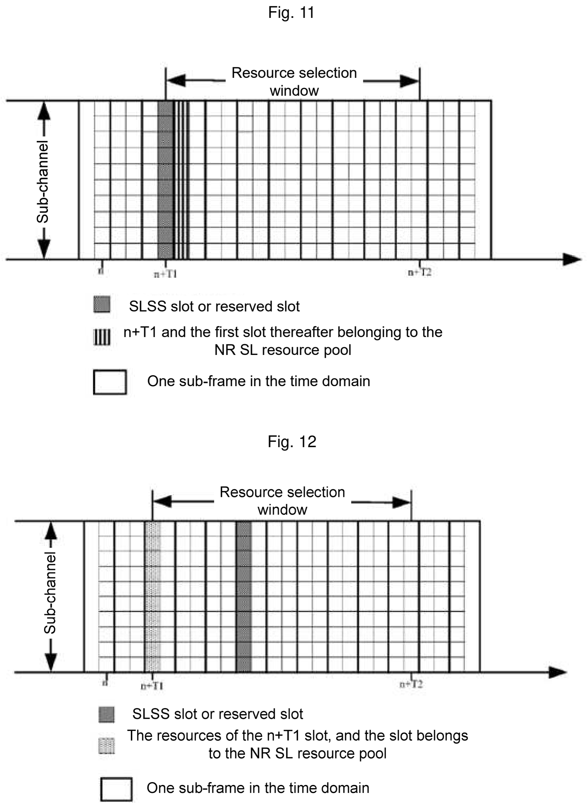

Fig. 11 is a first schematic diagram of determining a starting moment of a resource selection window according to some embodiments of the present application. Fig. 12 is a second schematic diagram of determining a starting moment of a resource selection window according to some embodiments of the present application. In Figs. 11 and 12, the SCS of the second resource pool is 15 kHz (the resource granularity in the time domain is 1 sub-frame = 1 ms), and when the SCS configuration of the first resource pool is 30 kHz (the resource granularity in the time domain is 1 slot = 0.5 ms), one candidate resource occupies one subchannel.

As shown in Figs. 11 and 12, the starting time n+T1 of the resource selection window, and the first slot belonging to the first resource pool after that time, correspond to the first slot on one sub-frame.

In some embodiments of the present application, before Step 201, the method further includes: determining an SLSS slot configuration of the first physical channel structure, the SLSS slot configuration being used for determining the first resource pool, and the SLSS slot of the first physical channel structure satisfying at least one of the following:

in cases where one sub-frame includes one SLSS slot, the SLSS is the last slot on one sub-frame;

in cases where one sub-frame includes one SLSS slot, the SLSS is any slot on one sub-frame other than the first slot;

in cases where one sub-frame includes a plurality of SLSS slots, the plurality of SLSSs are a plurality of continuous slots, including the last slot, on one sub-frame;

in cases where one sub-frame includes a plurality of SLSS slots, the plurality of SLSSs are a plurality of any slots on one sub-frame other than the first slot; and

in cases where one sub-frame includes a plurality of SLSS slots, the plurality of SLSSs continuously occupy all of the slots on one sub-frame.

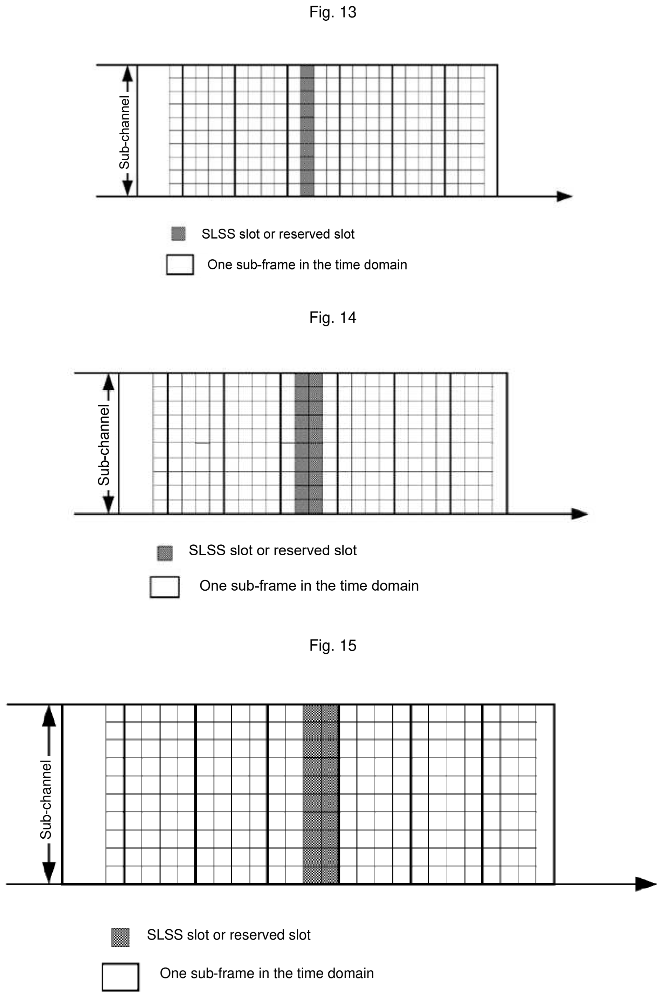

Fig. 13 is a first schematic diagram of an SLSS slot configuration of a first physical channel structure according to some embodiments of the present application; Fig. 14 is a second schematic diagram of an SLSS slot configuration of a first physical channel structure according to some embodiments of the present application; Fig. 15 is a third schematic diagram of an SLSS slot configuration of a first physical channel structure according to some embodiments of the present application. In Fig. 13 to Fig. 15, the SCS of the second resource pool is 15 kHz (the resource granularity in the time domain is 1 sub-frame = 1 ms), and the SCS configuration of the first resource pool is 60 kHz (the resource granularity in the time domain is 1 slot = 0.25 ms).

In the case that a sub-frame includes only one SLSS time slot, as shown in Fig. 13, the SLSS is any time slot other than the first time slot in the sub-frame.

In the case of a sub-frame including a plurality of SLSS slots, as shown in Fig. 14, an SLSS is any slot other than the first slot on a sub-frame.

In the case of a sub-frame including a plurality of SLSS slots, as shown in Fig. 15, an SLSS is a plurality of consecutive slots including the last slot on a sub-frame.

In some embodiments of the present application, after Step 202, the method further includes:

performing resource selection on the basis of the candidate resource set on which resource exclusion has been performed, and determining fifth candidate resources;

sending a physical sidelink control channel (PSCCH) or a physical sidelink shared channel (PSSCH) on the fifth candidate resources, the PSCCH is used for bearing first-order sidelink control information (SCI), the PSSCH is used for bearing second-order SCI, and the first-order SCI and/or the second-order SCI include type information of the first sidelink device.

It should be noted that the physical layer reports the candidate resource set to the higher layer after excluding the resources, and the higher layer selects the resources, determining the number of fifth candidate resources required to be transmitted, and then performing PSCCH and PSSCH transmission on the fifth candidate resources, The first-level SCI and/or the second-level SCI includes type information of the first sidelink device, where the type information is used to indicate whether the first sidelink device is a Type A device or a Type B device.

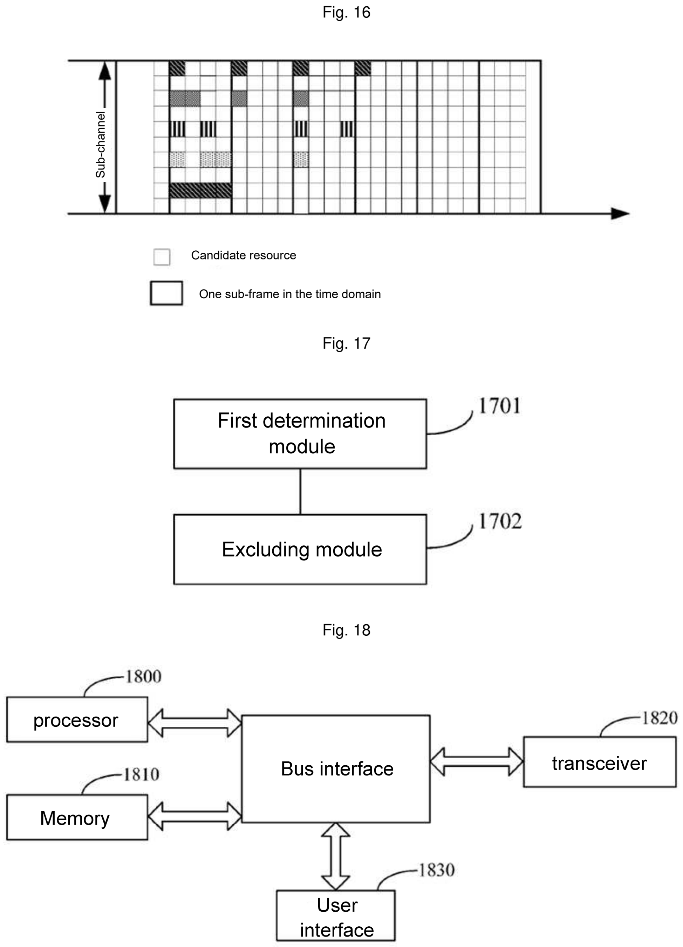

The fifth candidate resource is in one or more sub-frames, and one or more fifth candidate resources in the same sub-frame must be a first slot candidate resource in the sub-frame and a subsequent consecutive or disconsecutive resource with the same frequency domain. Fig. 16 is a schematic diagram of determining fifth candidate resources according to some embodiments of the present application; in Fig. 16, the SCS of the second resource pool is 15 kHz (the resource granularity in the time domain is 1 sub-frame = 1 ms), and the SCS configuration of the first resource pool is 60 kHz (the resource granularity in the time domain is 1 slot = 0.25 ms). As shown in Fig. 16, the first sidelink device transmission requires four fifth candidate resources, where the different shading in Figure 16 represents different fifth candidate resource selection methods.

In conclusion, according to the method for allocating a sidelink resource in some embodiments of the present application, a first sidelink device acquires first information about an NR SL module and second information about an LTE SL module, and allocates a resource for different pieces of second information, so that sending collision between the NR SL module and the LTE SL module in the first sidelink device can be avoided; when resources occupied by an LTE (Long Term Evolution) SL are eliminated as far as possible, resource collision when an LTE SL and an NR SL co-exist of the same channel with each other is reduced, and the influence on the performance of the LTE SL system is reduced as far as possible; The present application can also avoid or mitigate the failure of an LTE SL receiving AGC caused by the transmission of the NR SL, realize the co-existence of the same channel between the LTE SL and the NR SL, and can adapt to the potential dynamic change of the service load of the LTE SL and the NR SL.

As shown in Fig. 17, the embodiments of the present application also provide an apparatus for allocating sidelink resource, applied to the first sidelink device, and comprising:

a first determination module 1701 configured to determine a candidate resource set; and

an excluding module 1702, configured to perform resource exclusion according to first information of a first radio access module and/or second information of a second radio access module, and the candidate resource set.

In some embodiments of the present application, the excluding module 1702 is specifically configured to perform at least one of the following:

according to the first information of the first radio access module and/or the second information of the second radio access module, performing resource exclusion on first candidate resources in the candidate resource set; and

according to the first information of the first radio access module and/or the second information of the second radio access module, performing resource exclusion on second candidate resources in the candidate resource set from which the first candidate resources have been excluded.

In some embodiments of the present application, the first determination module 1701 is specifically configured to perform one of the following:

the first item: determining a set of all candidate resources in a resource selection window as an initial candidate resource set;

performing resource exclusion on third candidate resources in the initial candidate resource set to obtain the candidate resource set; and

determining the total number of candidate resources according to the total number of all candidate resources in the candidate resource set;

the second item: determining a set of all candidate resources in the resource selection window as the candidate resource set;

determining the total number of candidate resources according to the total number of all candidate resources in the candidate resource set except the third candidate resources;

the third item: determining the total number of candidate resources according to the total number of all candidate resources in the resource selection window except the fourth candidate resources; and

determining a set of all candidate resources in the resource selection window except the fourth candidate resource as the candidate resource set, or determining a set of all candidate resources corresponding to the total number of candidate resources as the candidate resource set.

In some embodiments of the present application, the third candidate resources satisfy one of the following:

resources of a first slot of a target sub-frame where the third candidate resources are located are not in the candidate resource set;

resources of a first slot of a target sub-frame where the third candidate resources are located do not belong to a first resource pool;

resources in the same frequency domain as the first slot of the target sub-frame where the third candidate resources are located are not in the candidate resource set;

resources in the same frequency domain as the first slot of the target sub-frame where the third candidate resources are located do not belong to the first resource pool;

a sub-frame where the third candidate resources are located is a sidelink synchronization signal (SLSS) sub-frame of a second physical channel structure; and

a sub-frame where the third candidate resources are located overlaps with an SLSS sub-frame of the second physical channel structure.

In some embodiments of the present application, the fourth candidate resources satisfy one of the following:

resources of a first slot of a target sub-frame where the fourth candidate resources are located are not in the resource selection window;

resources of the first slot of the target sub-frame where the fourth candidate resources are located do not belong to a first resource pool;

resources in the same frequency domain as the first slot of the target sub-frame where the fourth candidate resources are located are not in the resource selection window;

resources in the same frequency domain as the first slot of the target sub-frame where the fourth candidate resources are located do not belong to the first resource pool;

a sub-frame where the fourth candidate resources are located is a sidelink synchronization signal (SLSS) sub-frame of a second physical channel structure; and

a sub-frame where the fourth candidate resources are located overlaps with an SLSS sub-frame of the second physical channel structure.

In some embodiments of the present application, the second information includes at least one of the following:

resource occupation information when the second radio access module sends in the second resource pool;

unmonitored sub-frame information of the second radio access module;

sensing information of the second radio access module;

configuration information of the second resource pool;

a first target moment, the first target moment being a starting sub-frame of a time window corresponding to the second information; and

a second target moment, the second target moment being an ending sub-frame of a time window corresponding to the second information.

In some embodiments of the present application, the first candidate resources satisfy at least one of the following:

the first candidate resources or the sixth candidate resources overlap with first target resources in a time domain;

the first candidate resources or the sixth candidate resources overlap with second target resources;

a slot where the first candidate resources are located or a first slot overlaps with a first target sub-frame in a time domain;

the first candidate resources or the sixth candidate resources overlap with the third target resources;

a slot where the first candidate resources are located or the first slot overlaps with a second target sub-frame in a time domain;

the first candidate resources or the sixth candidate resources overlap with fourth target resources,

wherein the sixth candidate resources are resources of a $j^{th}$ first logic resource reservation period after the first candidate resources;

the first target resources are resources in which the first target resource occupation information reserves a first number of times in the second resource pool according to a second logical resource reservation period, the first number is a positive integer less than or equal to the first target value;

the second target resources are resources in which the second target resource occupation information reserves the first number of times in the second resource pool according to the second logical resource reservation period;

the third target resources are resources in which the resources composed of all subchannels on the target unmonitored sub-frame information reserves a second number of times in the second resource pool according to a third logical resource reservation period, the second number of times is a positive integer less than or equal to a second target value;

the fourth target resources are resources in which the target sensing information reserves a third number of times in the second resource pool according to a fourth logical resource reservation period, the third number of times is a positive integer less than or equal to a third target value;

the first target sub-frame is a sub-frame in which the sub-frame in which the first target resource occupation information is located is reserved for the first number of times in the second resource pool according to the second logical reservation period;

the second target sub-frame is a sub-frame in which target unmonitored sub-frame information is reserved for the second number of times in the second resource pool according to the third logical resource reservation period;

the first target resource occupation information is resource occupation information, in the second information, of the second radio access module during transmission in the second resource pool;

the second target resource occupation information is information of resources composed of all subchannels on a sub-frame where the first target resource occupation information is located;

the target unmonitored sub-frame information is unmonitored sub-frame information of the second radio access module in the second information;

the target sensing information is resource occupation information, in the sensing information of the second radio access module included in the second information, of the second radio access module of the second sidelink device;

the first logic resource reservation period corresponds to the first resource reservation period when the first radio access module of the first sidelink device transmits in the first resource pool;

the second logical resource reservation period corresponds to the second resource reservation period in the second information when the second radio access module transmits in the second resource pool;

the third logic resource reservation period is a logic resource reservation period corresponding to the third resource reservation period;

the third resource reservation period is any resource reservation period, in the second information, in the configuration information of the second resource pool;

the fourth logical resource reservation period is a logical resource reservation period corresponding to the fourth resource reservation period;

the fourth resource reservation period is the resource reservation period, in the sensing information of the second radio access module included in the second information, of the resource occupation of the second radio access module of the second sidelink device; and

the first slot is a slot of j first logic reservation periods after a slot where the first candidate resource is located.

In some embodiments of the present application, the first target value satisfies one of the following:

in cases where the second resource reservation period is less than first time, and a first moment minus a first logical sub-frame moment is less than or equal to the second logical resource reservation period, the first target value is determined on the basis of a ratio of the first time to the second resource reservation period or a ratio of the second time to the second logical resource reservation period;

in cases where the second resource reservation period is less than the first time, and the first moment minus the first logical sub-frame moment is less than or equal to the product of the first value and the second logical resource reservation period, the first target value is determined on the basis of the ratio of the first time to the second resource reservation period or the ratio of the second time to the second logical resource reservation period.

The second target value satisfies one of the following:

in cases where the third resource reservation period is less than the first time, and the first moment minus the second logical sub-frame moment is less than or equal to the third logical resource reservation period, the second target value is determined on the basis of a ratio of the first time to the third resource reservation period or a ratio of the second time to the third logical resource reservation period;

in cases where the third resource reservation period is less than the first time, and the first moment minus the second logical sub-frame moment is less than or equal to the product of the first value and the third logical resource reservation period, the second target value is determined on the basis of the ratio of the first time to the third resource reservation period or the ratio of the second time to the third logical resource reservation period.

The third target value satisfies one of the following:

in cases where the fourth resource reservation period is less than the first time, and the first moment minus the third logical sub-frame moment is less than or equal to the fourth logical resource reservation period, the third target value is determined on the basis of the ratio of the first time to the fourth resource reservation period or the ratio of the second time to the fourth logical resource reservation period;

in cases where the fourth resource reservation period is less than the first time, and the first moment minus the third logical sub-frame moment is less than or equal to the product of the first value and the fourth logical resource reservation period, the third target value is determined on the basis of the ratio of the first time to the fourth resource reservation period or the ratio of the second time to the fourth logical resource reservation period;

the first logical sub-frame moment is a logical sub-frame moment corresponding to the time-domain position of resource occupation information of a second radio access module in the second information;

the second logical sub-frame moment is a logical sub-frame moment, in the second information, corresponding to the unmonitored sub-frame information of the second radio access module;

the third logical sub-frame moment is a logical sub-frame moment, in sensing information of the second radio access module included in the second information, corresponding to the time-domain position of resource occupation information of the second radio access module of the second sidelink device.

In some embodiments of the present application, the first time satisfies one of the following:

the first time is time obtained by converting the size of the resource selection window of the first radio access module into milliseconds;

the first time is a time difference obtained by subtracting the sub-frame moment where the second target slot is located from the sub-frame moment where the first target slot is located;

the first time is time in milliseconds obtained by converting the time difference between the sub-frame moment where the first target slot is located and the second target moment of the second information;

the second time satisfies one of the following:

the second time is the total time of logical sub-frames, belonging to the second physical channel structure, among all sub-frames where the slots between the second target slot and the first target slot are located;

the second time is the total time of logical sub-frames, belonging to the second physical channel structure, among all sub-frames between the sub-frame moment where the second target slot is located and the sub-frame moment where the first target slot is located;

the second time is the total time of logical sub-frames, belonging to the second physical channel structure, among all sub-frames between the second target moment in the second information and the sub-frame moment where the first target slot is located;

the first target slot is the ending time of the resource selection window of the first radio access module;

the second target slot is a moment when the first sidelink device triggers the allocation of the first physical channel structure resources; and

the second target moment is an ending sub-frame of the time window corresponding to the second information.

In some embodiments of the present application, the first moment is determined according to one of the following:

in cases where the sub-frame where the second target slot is located belongs to a logical sub-frame of the second physical channel structure, the first moment is the logical sub-frame moment of the second physical channel structure corresponding to the sub-frame where the second target slot is located;

in cases where the sub-frame where the second target slot is located does not belong to a logical sub-frame of the second physical channel structure, the first moment is the logical sub-frame moment of the first logical sub-frame belonging to the second physical channel structure after the sub-frame where the second target slot is located, or the first moment is the logical sub-frame moment of the first logical sub-frame belonging to the second physical channel structure after the second target slot;

the first moment is a logical sub-frame moment of a first logic sub-frame belonging to the second physical channel structure after the second target moment;

the first moment is a logical sub-frame moment of a first logic sub-frame belonging to the second physical channel structure after a third target moment;

the third target moment is the latest moment when the first radio access module receives the second information, or the target moment is the earliest moment of the second target moment;

the first value is determined according to at least one of the following:

the second target moment;

the second resource reservation period;

the third resource reservation period;

the fourth resource reservation period; and

a moment when the first radio access module receives the second information.

In some embodiments of the present application, the second candidate resources satisfy at least one of the following:

the resources in the same frequency domain as the first slot of the target sub-frame where the second candidate resources are located are not included in the candidate resource set from which the first candidate resources have been excluded;

the resources in the same frequency domain as the first slot of the target sub-frame where the second candidate resources are located have been excluded;

the second candidate resources are not contiguous with the resources in the same frequency domain as the first slot of the target sub-frame where the second candidate resources are located;

a sub-frame where the second candidate resources are located is a sidelink synchronization signal (SLSS) sub-frame of a second physical channel structure; and

a slot where the second candidate resources are located overlaps with an SLSS sub-frame of the second physical channel structure.

In some embodiments of the present application, the apparatus further includes:
a second determination module, configured to determine a starting moment of the resource selection window, the starting moment of the resource selection window satisfying the following condition:
when the starting moment of the resource selection window belongs to the first resource pool, the starting moment of the resource selection window is the first slot of one sub-frame; otherwise, the first slot belonging to the first resource pool after the starting moment of the resource selection window is the first slot of one sub-frame.
In some embodiments of the present application, the apparatus further includes:
a third determination module, configured to determine an SLSS slot configuration of the first physical channel structure, the SLSS slot configuration being used for determining the first resource pool, and the SLSS slot of the first physical channel structure satisfying at least one of the following:

in cases where one sub-frame comprises one SLSS slot, the SLSS is the last slot on one sub-frame;

in cases where one sub-frame comprises one SLSS slot, the SLSS is any slot on the sub-frame other than the first slot;

in cases where one sub-frame comprises a plurality of SLSS slots, the plurality of SLSSs are a plurality of continuous slots, comprising the last slot, on one sub-frame;

in cases where one sub-frame comprises a plurality of SLSS slots, the plurality of SLSSs are a plurality of any slots on the sub-frame other than the first slot; and

in cases where one sub-frame comprises a plurality of SLSS slots, the plurality of SLSSs continuously occupy all of the slots on one sub-frame.

In some embodiments of the present application, the apparatus further includes:

a selection module, configured to perform resource selection on the basis of the candidate resource set on which resource exclusion has been performed, and determining fifth candidate resources;

a sending module, configured to send a physical sidelink control channel (PSCCH) or a physical sidelink shared channel (PSSCH) on the fifth candidate resources, the PSCCH is used for bearing first-order sidelink control information (SCI), the PSSCH is used for bearing second-order SCI, and the first-order SCI and/or the second-order SCI includes type information of the first sidelink device.

As shown in Fig. 18, some embodiments of the present application also provide a sidelink device, including: a processor 1800; and a memory 1810 connected to the processor 1800 by means of a bus interface, wherein the memory 1810 is used for storing a program and data which are used by the processor 1800 when executing an operation, and the processor 1800 calls and executes the program and data stored in the memory 1810,
wherein the terminal further comprises a transceiver 1820, the transceiver 1820 is connected to a bus interface, and is used for receiving and sending data under the control of the processor 1800.
In some embodiments of the present application, the processor 1800 executes the following process:

determining a candidate resource set;

performing resource exclusion according to first information of a first radio access module and/or second information of a second radio access module, and the candidate resource set.

In some embodiments of the present application, the processor 1800 specifically executes at least one of the following:

according to the first information of the first radio access module and/or the second information of the second radio access module, performing resource exclusion on first candidate resources in the candidate resource set; and

according to the first information of the first radio access module and/or the second information of the second radio access module, performing resource exclusion on second candidate resources in the candidate resource set from which the first candidate resources have been excluded.

In some embodiments of the present application, the processor 1800 specifically executes one of the following:

the first item: determining a set of all candidate resources in a resource selection window as an initial candidate resource set;

performing resource exclusion on third candidate resources in the initial candidate resource set to obtain the candidate resource set; and

determining the total number of candidate resources according to the total number of all candidate resources in the candidate resource set;

the second item: determining a set of all candidate resources in the resource selection window as the candidate resource set;

determining the total number of candidate resources according to the total number of all candidate resources in the candidate resource set except the third candidate resources;

the third item: determining the total number of candidate resources according to the total number of all candidate resources in the resource selection window except the fourth candidate resources; and

determining a set of all candidate resources in the resource selection window except the fourth candidate resource as the candidate resource set, or determining a set of all candidate resources corresponding to the total number of candidate resources as the candidate resource set.

In some embodiments of the present application, the third candidate resources satisfy one of the following:

resources of a first slot of a target sub-frame where the third candidate resources are located are not in the candidate resource set;

resources of a first slot of a target sub-frame where the third candidate resources are located do not belong to a first resource pool;

resources in the same frequency domain as the first slot of the target sub-frame where the third candidate resources are located are not in the candidate resource set;

resources in the same frequency domain as the first slot of the target sub-frame where the third candidate resources are located do not belong to the first resource pool;

a sub-frame where the third candidate resources are located is a sidelink synchronization signal (SLSS) sub-frame of a second physical channel structure; and

a sub-frame where the third candidate resources are located overlaps with an SLSS sub-frame of the second physical channel structure.

In some embodiments of the present application, the fourth candidate resources satisfy one of the following:

resources of a first slot of a target sub-frame where the fourth candidate resources are located are not in the resource selection window;

resources of the first slot of the target sub-frame where the fourth candidate resources are located do not belong to a first resource pool;

resources in the same frequency domain as the first slot of the target sub-frame where the fourth candidate resources are located are not in the resource selection window;

resources in the same frequency domain as the first slot of the target sub-frame where the fourth candidate resources are located do not belong to the first resource pool;

a sub-frame where the fourth candidate resources are located is a sidelink synchronization signal (SLSS) sub-frame of a second physical channel structure; and

a sub-frame where the fourth candidate resources are located overlaps with an SLSS sub-frame of the second physical channel structure.

In some embodiments of the present application, the second information includes at least one of the following:

resource occupation information when the second radio access module sends in the second resource pool;

unmonitored sub-frame information of the second radio access module;

sensing information of the second radio access module;

configuration information of the second resource pool;

a first target moment, the first target moment being a starting sub-frame of a time window corresponding to the second information; and

a second target moment, the second target moment being an ending sub-frame of a time window corresponding to the second information.

In some embodiments of the present application, the first candidate resources satisfy at least one of the following:

the first candidate resources or the sixth candidate resources overlap with first target resources in a time domain;

the first candidate resources or the sixth candidate resources overlap with second target resources;

a slot where the first candidate resources are located or a first slot overlaps with a first target sub-frame in a time domain;

the first candidate resources or the sixth candidate resources overlap with the third target resources;

a slot where the first candidate resources are located or the first slot overlaps with a second target sub-frame in a time domain;

the first candidate resources or the sixth candidate resources overlap with fourth target resources,

wherein the sixth candidate resources are resources of a $j^{th}$ first logic resource reservation period after the first candidate resources;

the first target resources are resources in which the first target resource occupation information reserves a first number of times in the second resource pool according to a second logical resource reservation period, the first number is a positive integer less than or equal to the first target value;

the second target resources are resources in which the second target resource occupation information reserves the first number of times in the second resource pool according to the second logical resource reservation period;

the third target resources are resources in which the resources composed of all subchannels on the target unmonitored sub-frame information reserves a second number of times in the second resource pool according to a third logical resource reservation period, the second number of times is a positive integer less than or equal to a second target value;

the fourth target resources are resources in which the target sensing information reserves a third number of times in the second resource pool according to a fourth logical resource reservation period, the third number of times is a positive integer less than or equal to a third target value;

the first target sub-frame is a sub-frame rin which the sub-frame in which the first target resource occupation information is located is reserved for the first number of times in the second resource pool according to the second logical reservation period;

the second target sub-frame is a sub-frame in which target unmonitored sub-frame information is reserved for the second number of times in the second resource pool according to the third logical resource reservation period;

the first target resource occupation information is resource occupation information, in the second information, of the second radio access module during transmission in the second resource pool;

the second target resource occupation information is information of resources composed of all subchannels on a sub-frame where the first target resource occupation information is located;

the target unmonitored sub-frame information is unmonitored sub-frame information of the second radio access module in the second information;

the target sensing information is resource occupation information, in the sensing information of the second radio access module included in the second information, of the second radio access module of the second sidelink device;

the first logic resource reservation period corresponds to the first resource reservation period when the first radio access module of the first sidelink device transmits in the first resource pool;

the second logical resource reservation period corresponds to the second resource reservation period in the second information when the second radio access module transmits in the second resource pool;

the third logic resource reservation period is a logic resource reservation period corresponding to the third resource reservation period;

the third resource reservation period is any resource reservation period, in the second information, in the configuration information of the second resource pool;

the fourth logical resource reservation period is a logical resource reservation period corresponding to the fourth resource reservation period;

the fourth resource reservation period is the resource reservation period, in the sensing information of the second radio access module included in the second information, of the resource occupation of the second radio access module of the second sidelink device; and

the first slot is a slot of $j^{th}$ first logic reservation periods after a slot where the first candidate resource is located.

In some embodiments of the present application, the first target value satisfies one of the following:

in cases where the second resource reservation period is less than first time, and a first moment minus a first logical sub-frame moment is less than or equal to the second logical resource reservation period, the first target value is determined on the basis of a ratio of the first time to the second resource reservation period or a ratio of the second time to the second logical resource reservation period;

in cases where the second resource reservation period is less than the first time, and the first moment minus the first logical sub-frame moment is less than or equal to the product of the first value and the second logical resource reservation period, the first target value is determined on the basis of the ratio of the first time to the second resource reservation period or the ratio of the second time to the second logical resource reservation period.

The second target value satisfies one of the following:

in cases where the third resource reservation period is less than the first time, and the first moment minus the second logical sub-frame moment is less than or equal to the third logical resource reservation period, the second target value is determined on the basis of a ratio of the first time to the third resource reservation period or a ratio of the second time to the third logical resource reservation period;

in cases where the third resource reservation period is less than the first time, and the first moment minus the second logical sub-frame moment is less than or equal to the product of the first value and the third logical resource reservation period, the second target value is determined on the basis of the ratio of the first time to the third resource reservation period or the ratio of the second time to the third logical resource reservation period.

The third target value satisfies one of the following:

in cases where the fourth resource reservation period is less than the first time, and the first moment minus the third logical sub-frame moment is less than or equal to the fourth logical resource reservation period, the third target value is determined on the basis of the ratio of the first time to the fourth resource reservation period or the ratio of the second time to the fourth logical resource reservation period;

in cases where the fourth resource reservation period is less than the first time, and the first moment minus the third logical sub-frame moment is less than or equal to the product of the first value and the fourth logical resource reservation period, the third target value is determined on the basis of the ratio of the first time to the fourth resource reservation period or the ratio of the second time to the fourth logical resource reservation period;

the first logical sub-frame moment is a logical sub-frame moment corresponding to the time-domain position of resource occupation information of a second radio access module in the second information;

the second logical sub-frame moment is a logical sub-frame moment, in the second information, corresponding to the unmonitored sub-frame information of the second radio access module;

the third logical sub-frame moment is a logical sub-frame moment, in sensing information of the second radio access module included in the second information, corresponding to the time-domain position of resource occupation information of the second radio access module of the second sidelink device.

In some embodiments of the present application, the first time satisfies one of the following:

the first time is time obtained by converting the size of the resource selection window of the first radio access module into milliseconds;

the first time is a time difference obtained by subtracting the sub-frame moment where the second target slot is located from the sub-frame moment where the first target slot is located;

the first time is time in milliseconds obtained by converting the time difference between the sub-frame moment where the first target slot is located and the second target moment of the second information;

the second time satisfies one of the following:

the second time is the total time of logical sub-frames, belonging to the second physical channel structure, among all sub-frames where the slots between the second target slot and the first target slot are located;

the second time is the total time of logical sub-frames, belonging to the second physical channel structure, among all sub-frames between the sub-frame moment where the second target slot is located and the sub-frame moment where the first target slot is located;

the second time is the total time of logical sub-frames, belonging to the second physical channel structure, among all sub-frames between the second target moment in the second information and the sub-frame moment where the first target slot is located;

the first target slot is the ending time of the resource selection window of the first radio access module;

the second target slot is a moment when the first sidelink device triggers the allocation of the first physical channel structure resources; and

the second target moment is an ending sub-frame of the time window corresponding to the second information.

In some embodiments of the present application, the first moment is determined according to one of the following:

in cases where the sub-frame where the second target slot is located belongs to a logical sub-frame of the second physical channel structure, the first moment is the logical sub-frame moment of the second physical channel structure corresponding to the sub-frame where the second target slot is located;

in cases where the sub-frame where the second target slot is located does not belong to a logical sub-frame of the second physical channel structure, the first moment is the logical sub-frame moment of the first logical sub-frame belonging to the second physical channel structure after the sub-frame where the second target slot is located, or the first moment is the logical sub-frame moment of the first logical sub-frame belonging to the second physical channel structure after the second target slot;

the first moment is a logical sub-frame moment of a first logic sub-frame belonging to the second physical channel structure after the second target moment;

the first moment is a logical sub-frame moment of a first logic sub-frame belonging to the second physical channel structure after a third target moment;

the third target moment is the latest moment when the first radio access module receives the second information, or the target moment is the earliest moment of the second target moment;

the first value is determined according to at least one of the following:

the second target moment;

the second resource reservation period;

the third resource reservation period;

the fourth resource reservation period; and

a moment when the first radio access module receives the second information.

In some embodiments of the present application, the second candidate resources satisfy at least one of the following:

the resources in the same frequency domain as the first slot of the target sub-frame where the second candidate resources are located are not included in the candidate resource set from which the first candidate resources have been excluded;

the resources in the same frequency domain as the first slot of the target sub-frame where the second candidate resources are located have been excluded;

the second candidate resources are not contiguous with the resources in the same frequency domain as the first slot of the target sub-frame where the second candidate resources are located;

a sub-frame where the second candidate resources are located is a sidelink synchronization signal (SLSS) sub-frame of a second physical channel structure; and

a slot where the second candidate resources are located overlaps with an SLSS sub-frame of the second physical channel structure.

In some embodiments of the present application, the processor 1800 further executes the following process:

determining a starting moment of the resource selection window, the starting moment of the resource selection window satisfying the following condition:

when the starting moment of the resource selection window belongs to the first resource pool, the starting moment of the resource selection window is the first slot of one sub-frame; otherwise, the first slot belonging to the first resource pool after the starting moment of the resource selection window is the first slot of one sub-frame.

In some embodiments of the present application, the processor 1800 further executes the following process: determining an SLSS slot configuration of the first physical channel structure, the SLSS slot configuration being used for determining the first resource pool, and the SLSS slot of the first physical channel structure satisfying at least one of the following:

in cases where one sub-frame comprises one SLSS slot, the SLSS is the last slot on one sub-frame;

in cases where one sub-frame comprises one SLSS slot, the SLSS is any slot on the sub-frame other than the first slot;

in cases where one sub-frame comprises a plurality of SLSS slots, the plurality of SLSSs are a plurality of continuous slots, comprising the last slot, on one sub-frame;

in cases where one sub-frame comprises a plurality of SLSS slots, the plurality of SLSSs are a plurality of any slots on the sub-frame other than the first slot; and

in cases where one sub-frame comprises a plurality of SLSS slots, the plurality of SLSSs continuously occupy all of the slots on one sub-frame.

In some embodiments of the present application, the processor 1800 further executes the following process:

performing resource selection on the basis of the candidate resource set on which resource exclusion has been performed, and determining fifth candidate resources;

sending a physical sidelink control channel (PSCCH) or a physical sidelink shared channel (PSSCH) on the fifth candidate resources, the PSCCH is used for bearing first-order sidelink control information (SCI), the PSSCH is used for bearing second-order SCI, and the first-order SCI and/or the second-order SCI includes type information of the first sidelink device.

In Fig. 18, the bus architecture may include any number of buses and bridges connected to each other, and is specifically linked by various circuits of one or more processors represented by the processor 1800 and a memory represented by the memory 1810. The bus architecture may further link various other circuits such as a peripheral device, a voltage regulator, and a power management circuit together. These are all well-known in the art, and therefore are not further described in the present specification. The bus interface provides a user interface 1830. The transceiver 1820 may be a plurality of elements, that is, include a transmitter and a receiver, and provide a unit for communicating with various other apparatuses on a transmission medium. The processor 1800 is responsible for managing the bus architecture and common processing, and the memory 1810 may store data used when the processor 1800 performs an operation.

In addition, some embodiments of the present application further provide a readable storage medium, on which a computer program is stored, wherein when the program is executed by a processor, the steps of the method for allocating sidelink resource as described above are implemented.

In the several embodiments provided in the present application, it should be understood that the disclosed method and apparatus can be implemented in other ways. For example, the apparatus embodiments described above are merely exemplary. For example, division of the units is merely logical function division, and may be other division in actual implementation. For example, division into the units is merely logical function division and may be other division in actual implementation. For example, a plurality of units or assemblies may be combined or integrated into another system, or some features may be ignored or not executed. In addition, the displayed or discussed mutual couplings or direct couplings or communication connections may be implemented through some interfaces. The indirect couplings or communication connections between the apparatuses or units may be implemented in electrical, mechanical, or other forms.

In addition, functional units in the embodiments of the present disclosure may be integrated into one processing unit, or the units may exist alone physically, or two or more units are integrated into one unit. The described integrated unit may be both implemented in the form of hardware, and may also be implemented in the form of hardware and software functional units.

The integrated units implemented in the form of software functional units may be stored in a computer readable storage medium. The software functional units above may be stored in a storage medium and comprise several instructions which are used to enable a computer device (may be a personal computer, a server or a network device,

**EP 4 686 281 A1**

etc.) to execute some of the steps of the resource selection method described in the embodiments of the application. The storage medium above includes: any medium that can store program codes, such as a USB flash disk, a removable hard disk, a read-only memory (ROM for short), a random access memory (RAM for short), a magnetic disk, or an optical disk.

The description above relates to preferred embodiments of the present application. It should be noted that for a person of ordinary skill in the present technical field, several improvements and modifications can also be made without departing from the principle of the present application, and these improvements and modifications shall also be within the scope of protection of the present application.

**Claims**

1. A method for allocating sidelink resource, applied to a first sidelink device, and comprising:

   determining a candidate resource set;
   performing resource exclusion according to first information of a first radio access module and/or second information of a second radio access module, and the candidate resource set.

2. The method as claimed in claim 1, wherein performing resource exclusion according to the first information of the first radio access module and/or the second information of the second radio access module, and the candidate resource set comprises at least one of the following:

   according to the first information of the first radio access module and/or the second information of the second radio access module, performing resource exclusion on first candidate resources in the candidate resource set; and
   according to the first information of the first radio access module and/or the second information of the second radio access module, performing resource exclusion on second candidate resources in the candidate resource set from which the first candidate resources have been excluded.

3. The method as claimed in claim 1, wherein determining the candidate resource set comprises one of the following:

   the first item: determining a set of all candidate resources in a resource selection window as an initial candidate resource set;
   performing resource exclusion on third candidate resources in the initial candidate resource set to obtain the candidate resource set; and
   determining the total number of candidate resources according to the total number of all candidate resources in the candidate resource set;
   the second item: determining a set of all candidate resources in the resource selection window as the candidate resource set;
   determining the total number of candidate resources according to the total number of all candidate resources in the candidate resource set except the third candidate resources;
   the third item: determining the total number of candidate resources according to the total number of all candidate resources in the resource selection window except the fourth candidate resources; and
   determining a set of all candidate resources in the resource selection window except the fourth candidate resource as the candidate resource set, or determining a set of all candidate resources corresponding to the total number of candidate resources as the candidate resource set.

4. The method as claimed in claim 3, wherein the third candidate resources satisfy one of the following:

   resources of a first slot of a target sub-frame where the third candidate resources are located are not in the candidate resource set;
   resources of a first slot of a target sub-frame where the third candidate resources are located do not belong to a first resource pool;
   resources in the same frequency domain as the first slot of the target sub-frame where the third candidate resources are located are not in the candidate resource set;
   resources in the same frequency domain as the first slot of the target sub-frame where the third candidate resources are located do not belong to the first resource pool;
   a sub-frame where the third candidate resources are located is a sidelink synchronization signal, SLSS, sub-frame of a second physical channel structure; and
   a slot where the third candidate resources are located overlaps with an SLSS sub-frame of the second physical

39

channel structure.

5. The method as claimed in claim 3, wherein the fourth candidate resources satisfy one of the following:

resources of a first slot of a target sub-frame where the fourth candidate resources are located are not in the resource selection window;
resources of the first slot of the target sub-frame where the fourth candidate resources are located do not belong to a first resource pool;
resources in the same frequency domain as the first slot of the target sub-frame where the fourth candidate resources are located are not in the resource selection window;
resources in the same frequency domain as the first slot of the target sub-frame where the fourth candidate resources are located do not belong to the first resource pool;
a sub-frame where the fourth candidate resources are located is a sidelink synchronization signal, SLSS, sub-frame of a second physical channel structure; and
a slot where the fourth candidate resources are located overlaps with an SLSS sub-frame of the second physical channel structure.

6. The method as claimed in claim 1, wherein the second information comprises at least one of the following:

resource occupation information when the second radio access module transmits in the second resource pool;
unmonitored sub-frame information of the second radio access module;
sensing information of the second radio access module;
configuration information of the second resource pool;
a first target moment, the first target moment being a starting sub-frame of a time window corresponding to the second information; and
a second target moment, the second target moment being an ending sub-frame of a time window corresponding to the second information.

7. The method as claimed in claim 2, wherein the first candidate resources satisfy at least one of the following:

the first candidate resources or the sixth candidate resources overlap with first target resources in a time domain;
the first candidate resources or the sixth candidate resources overlap with second target resources;
a slot where the first candidate resources are located or a first slot overlaps with a first target sub-frame in a time domain;
the first candidate resources or the sixth candidate resources overlap with the third target resources;
a slot where the first candidate resources are located or the first slot overlaps with a second target sub-frame in a time domain;
the first candidate resources or the sixth candidate resources overlap with fourth target resources,
wherein the sixth candidate resources are resources of a $j^{th}$ first logic resource reservation period after the first candidate resources;
the first target resources are resources in which the first target resource occupation information reserves a first number of times in the second resource pool according to a second logical resource reservation period, the first number is a positive integer less than or equal to the first target value;
the second target resources are resources in which the second target resource occupation information reserves the first number of times in the second resource pool according to the second logical resource reservation period;
the third target resources are resources in which the resources composed of all subchannels on the target unmonitored sub-frame information reserves a second number of times in the second resource pool according to a third logical resource reservation period, the second number of times is a positive integer less than or equal to a second target value;
the fourth target resources are resources in which the target sensing information reserves a third number of times in the second resource pool according to a fourth logical resource reservation period, the third number of times is a positive integer less than or equal to a third target value;
the first target sub-frame is a sub-frame in which the sub-frame in which the first target resource occupation information is located is reserved for the first number of times in the second resource pool according to the second logical reservation period;
the second target sub-frame is a sub-frame in which target unmonitored sub-frame information is reserved for the second number of times in the second resource pool according to the third logical resource reservation period;
the first target resource occupation information is resource occupation information, in the second information, of the second radio access module during transmission in the second resource pool;

the second target resource occupation information is information of resources composed of all subchannels on a sub-frame where the first target resource occupation information is located;

the target unmonitored sub-frame information is unmonitored sub-frame information of the second radio access module in the second information;

the target sensing information is resource occupation information, in the sensing information of the second radio access module included in the second information, of the second radio access module of the second sidelink device;

the first logic resource reservation period corresponds to the first resource reservation period when the first radio access module of the first sidelink device transmits in the first resource pool;

the second logical resource reservation period corresponds to the second resource reservation period in the second information when the second radio access module transmits in the second resource pool;

the third logic resource reservation period is a logic resource reservation period corresponding to the third resource reservation period;

the third resource reservation period is any resource reservation period, in the second information, in the configuration information of the second resource pool;

the fourth logical resource reservation period is a logical resource reservation period corresponding to the fourth resource reservation period;

the fourth resource reservation period is the resource reservation period, in the sensing information of the second radio access module included in the second information, of the resource occupation of the second radio access module of the second sidelink device; and

the first slot is a slot of j first logic reservation periods after a slot where the first candidate resource is located.

8. The method as claimed in claim 7, wherein
the first target value satisfies one of the following:

in cases where the second resource reservation period is less than first time, and a first moment minus a first logical sub-frame moment is less than or equal to the second logical resource reservation period, the first target value is determined on the basis of a ratio of the first time to the second resource reservation period or a ratio of the second time to the second logical resource reservation period;

in cases where the second resource reservation period is less than the first time, and the first moment minus the first logical sub-frame moment is less than or equal to the product of the first value and the second logical resource reservation period, the first target value is determined on the basis of the ratio of the first time to the second resource reservation period or the ratio of the second time to the second logical resource reservation period;

the second target value satisfies one of the following:

in cases where the third resource reservation period is less than the first time, and the first moment minus the second logical sub-frame moment is less than or equal to the third logical resource reservation period, the second target value is determined on the basis of a ratio of the first time to the third resource reservation period or a ratio of the second time to the third logical resource reservation period;

in cases where the third resource reservation period is less than the first time, and the first moment minus the second logical sub-frame moment is less than or equal to the product of the first value and the third logical resource reservation period, the second target value is determined on the basis of the ratio of the first time to the third resource reservation period or the ratio of the second time to the third logical resource reservation period;

the third target value satisfies one of the following:

in cases where the fourth resource reservation period is less than the first time, and the first moment minus the third logical sub-frame moment is less than or equal to the fourth logical resource reservation period, the third target value is determined on the basis of the ratio of the first time to the fourth resource reservation period or the ratio of the second time to the fourth logical resource reservation period;

in cases where the fourth resource reservation period is less than the first time, and the first moment minus the third logical sub-frame moment is less than or equal to the product of the first value and the fourth logical resource reservation period, the third target value is determined on the basis of the ratio of the first time to the fourth resource reservation period or the ratio of the second time to the fourth logical resource reservation period;

the first logical sub-frame moment is a logical sub-frame moment corresponding to the time-domain position of resource occupation information of a second radio access module in the second information;

the second logical sub-frame moment is a logical sub-frame moment, in the second information, corresponding to the unmonitored sub-frame information of the second radio access module;

the third logical sub-frame moment is a logical sub-frame moment, in sensing information of the second radio access module included in the second information, corresponding to the time-domain position of resource occupation information of the second radio access module of the second sidelink device.

9. The method as claimed in claim 8, wherein
the first time satisfies one of the following:

the first time is time obtained by converting the size of the resource selection window of the first radio access module into milliseconds;

the first time is a time difference obtained by subtracting the sub-frame moment where the second target slot is located from the sub-frame moment where the first target slot is located;

the first time is time in milliseconds obtained by converting the time difference between the sub-frame moment where the first target slot is located and the second target moment of the second information;

the second time satisfies one of the following:

the second time is the total time of logical sub-frames, belonging to the second physical channel structure, among all sub-frames where the slots between the second target slot and the first target slot are located;

the second time is the total time of logical sub-frames, belonging to the second physical channel structure, among all sub-frames between the sub-frame moment where the second target slot is located and the sub-frame moment where the first target slot is located;

the second time is the total time of logical sub-frames, belonging to the second physical channel structure, among all sub-frames between the second target moment in the second information and the sub-frame moment where the first target slot is located;

the first target slot is the ending time of the resource selection window of the first radio access module;

the second target slot is a moment when the first sidelink device triggers the allocation of the first physical channel structure resources; and

the second target moment is an ending sub-frame of the time window corresponding to the second information.

10. The method as claimed in claim 9, wherein
the first moment is determined according to one of the following:

in cases where the sub-frame where the second target slot is located belongs to a logical sub-frame of the second physical channel structure, the first moment is the logical sub-frame moment of the second physical channel structure corresponding to the sub-frame where the second target slot is located;

in cases where the sub-frame where the second target slot is located does not belong to a logical sub-frame of the second physical channel structure, the first moment is the logical sub-frame moment of the first logical sub-frame belonging to the second physical channel structure after the sub-frame where the second target slot is located, or the first moment is the logical sub-frame moment of the first logical sub-frame belonging to the second physical channel structure after the second target slot;

the first moment is a logical sub-frame moment of a first logic sub-frame belonging to the second physical channel structure after the second target moment;

the first moment is a logical sub-frame moment of a first logic sub-frame belonging to the second physical channel structure after a third target moment;

the third target moment is the latest moment when the first radio access module receives the second information, or the target moment is the earliest moment of the second target moment;

the first value is determined according to at least one of the following:

the second target moment;
the second resource reservation period;
the third resource reservation period;
the fourth resource reservation period; and
a moment when the first radio access module receives the second information.

11. The method as claimed in claim 2, wherein the second candidate resources satisfy at least one of the following:

the resources in the same frequency domain as the first slot of the target sub-frame where the second candidate resources are located are not included in the candidate resource set from which the first candidate resources have been excluded;

the resources in the same frequency domain as the first slot of the target sub-frame where the second candidate resources are located have been excluded;

the second candidate resources are not contiguous with the resources in the same frequency domain as the first slot of the target sub-frame where the second candidate resources are located;

a sub-frame where the second candidate resources are located is a sidelink synchronization signal, SLSS, sub-frame of a second physical channel structure; and

a slot where the second candidate resources are located overlaps with an SLSS sub-frame of the second physical channel structure.

12. The method as claimed in claim 1, before determining the candidate resource set, the method further comprises: determining a starting moment of the resource selection window, the starting moment of the resource selection window satisfying the following condition:

when the starting moment of the resource selection window belongs to the first resource pool, the starting moment of the resource selection window is the first slot of one sub-frame; otherwise, the first slot belonging to the first resource pool after the starting moment of the resource selection window is the first slot of one sub-frame.

13. The method as claimed in claim 1, before determining the candidate resource set, the method further comprises: determining an SLSS slot configuration of the first physical channel structure, the SLSS slot configuration being used for determining the first resource pool, and the SLSS slot of the first physical channel structure satisfying at least one of the following:

in cases where one sub-frame comprises one SLSS slot, the SLSS is the last slot on one sub-frame;

in cases where one sub-frame comprises one SLSS slot, the SLSS is any slot on the sub-frame other than the first slot;

in cases where one sub-frame comprises a plurality of SLSS slots, the plurality of SLSSs are a plurality of consecutive slots, comprising the last slot, on one sub-frame;

in cases where one sub-frame comprises a plurality of SLSS slots, the plurality of SLSSs are a plurality of any slots on the sub-frame other than the first slot; and

in cases where one sub-frame comprises a plurality of SLSS slots, the plurality of SLSSs consecutively occupy all of the slots on one sub-frame.

14. The method as claimed in claim 1, wherein after performing resource exclusion, the method further comprises:

performing resource selection on the basis of the candidate resource set on which resource exclusion has been performed, and determining fifth candidate resources;

sending a physical sidelink control channel, PSCCH, or a physical sidelink shared channel, PSSCH, on the fifth candidate resources, the PSCCH is used for bearing first-order sidelink control information, SCI, the PSSCH is used for bearing second-order SCI, and the first-order SCI and/or the second-order SCI comprises type information of the first sidelink device.

15. An apparatus for allocating sidelink resource, applied to a first sidelink device, and comprising:

a first determination module configured to determine a candidate resource set; and

an excluding module, configured to perform resource exclusion according to first information of a first radio access module and/or second information of a second radio access module, and the candidate resource set.

16. A sidelink device, comprising: a processor, a memory and a program stored on the memory and capable of running on the processor, wherein the program, when executed by the processor, implements the steps of the method for allocating sidelink resource as claimed in any one of claims 1 to 14.

17. A readable storage medium, storing a program, wherein the program, when executed by the processor, implements the steps of the method for allocating sidelink resource as claimed in any one of claims 1 to 14.

Fig. 1

Packet arrival

Sensing window

Resource selection window

$n-T0$  $n-T_{proc,0}$  $n$  $n+T_1$  $n+T_2$

Fig. 2

A candidate resource set is determined — 201

Resource exclusion is performed according to first information of a first radio access module and/or second information of a second radio access module, and the candidate resource set — 202

Fig. 3

Resource selection
window

Sub-channels of
the first resource
pool

n          n+T1                                    n+T2

||||  Candidate resources/slots overlapping with the SLSS sub-frame of the LTE SL

▓  NR SLSS slot or reserved slot

▦  Candidate resource, the resource of the first slot in the target sub-frame where
the candidate resource is located is not in the candidate resource set /not in the
resource selection window

≡  Candidate resource, the resource of the first slot in the target sub-frame
where the candidate resource is located is not in the candidate resource set /
not in the first resource pool

▢  One sub-frame in the time domain

Fig. 4

Time window corresponding
to the second information

Resource selection
window of the first radio
access module

x        m              n    n+T1                      n+T2        Time

$P_{rsvp\_RX\_LTE}$        $P_{rsvp\_RX\_LTE}$        $P_{rsvp\_RX\_LTE}$

$P_{rsvp\_TX\_NR}$

▨  Resources occupied by the second radio access module
during transmission in the second resource pool

▩  The corresponding resources reserved by the resources occupied by the second radio access
module when transmitting in the second resource pool according to the second resource
reservation period of the second radio access module

▤  Slot where the first candidate resources to be excluded from the candidate resource set are located

▢  The slot in which the corresponding resource is located，the corresponding resource is the resource
reserved by the first candidate resource to be excluded in the candidate resource set according to
one logical resource reservation period corresponding to the first resource reservation period

EP 4 686 281 A1

Fig. 5

Resources occupied by the second radio access module
during transmission in the second resource pool

The corresponding resources reserved by the resources occupied by the second radio access
module when transmitting in the second resource pool according to the second resource
reservation period of the second radio access module

Slot where the first candidate resources to be excluded from the candidate resource set are located

The slot in which the corresponding resource is located，the corresponding resource is the resource
reserved by the first candidate resource to be excluded in the candidate resource set according to
one logical resource reservation period corresponding to the first resource reservation period

Fig. 6

Unmonitored sub-frames in the time window corresponding to the second information

The corresponding sub-frames/all resources on the corresponding sub-frames reserved
by the unmonitored sub-frames within the time window corresponding to the second
information according to the third resource reservation period

Slot where the first candidate resources to be excluded from the candidate resource set are located

The slot in which the corresponding resource is located, the corresponding resource is the resource
reserved by the first candidate resource to be excluded in the candidate resource set according to one/
two logical resource reservation period corresponding to the first resource reservation period

Fig. 7

| Legend symbol | Description |
|---|---|
| ▨ | Unmonitored subframes in the time window corresponding to the second information |
| ▧ | The unmonitored subframes within the time window corresponding to the second information are the corresponding subframes/all resources on the subframes after reservation according to the third resource reservation period |
| ▦ | Slot where the first candidate resources to be excluded from the candidate resource set are located |
| ▯ | the first candidate resource to be excluded in the candidate resource set corresponds to the slot in which the corresponding resource is located after the logical resource reservation period corresponding to one/two first resource reservation periods in the first resource pool |

Fig. 8

| Legend symbol | Description |
|---|---|
| ▨ | Resource occupation information when the second sidelink device is transmitting |
| ▧ | The resource reserved by the resource occupation information of the second sidelink device when transmitting according to the fourth resource reservation period |
| ▦ | First candidate resources to be excluded from the candidate resource set |
| ▯ | The corresponding resource reserved by the first candidate resource to be excluded in the candidate resource set according to one logical resource reservation period corresponding to the first resource reservation period |

Fig. 9

Resource occupation information when the second sidelink device is transmitting

The resource reserved by the resource occupation information of the second sidelink device when transmitting according to the fourth resource reservation period

First candidate resources to be excluded from the candidate resource set

The corresponding resource reserved by the first candidate resource to be excluded in the candidate resource set according to one logical resource reservation period corresponding to the first resource reservation period

Fig. 10

Candidate resources, which have already been excluded from the candidate resource set

Second candidate resource overlapping with the LTE SL SLSS sub-frame

NR SL SLSS slot or reserved slot

Candidate resource, the resource of the first slot of the target sub-frame where the candidate resource is located is not in the candidate resource set /not in the resource selection window

Candidate resource, the resource of the first slot of the target sub-frame where the candidate resource is located is not in the candidate resource set /not in the first resource pool

One sub-frame in the time domain

Fig. 11

SLSS slot or reserved slot

n+T1 and the first slot thereafter belonging to the
NR SL resource pool

One sub-frame in the time domain

Fig. 12

SLSS slot or reserved slot

The resources of the n+T1 slot, and the slot belongs
to the NR SL resource pool

One sub-frame in the time domain

Fig. 13

SLSS slot or reserved slot

One sub-frame in the time domain

Fig. 14

SLSS slot or reserved slot

One sub-frame in the time domain

Fig. 15

SLSS slot or reserved slot

One sub-frame in the time domain

Fig. 16

☐ Candidate resource

☐ One sub-frame in the time domain

Fig. 17

First determination module — 1701

Excluding module — 1702

Fig. 18

processor — 1800

Memory — 1810

Bus interface

transceiver — 1820

User interface — 1830

## INTERNATIONAL SEARCH REPORT

| International application No. |
| --- |
| **PCT/CN2024/081553** |

### A. CLASSIFICATION OF SUBJECT MATTER

H04W 72/02(2009.01)i

According to International Patent Classification (IPC) or to both national classification and IPC

### B. FIELDS SEARCHED

Minimum documentation searched (classification system followed by classification symbols)

IPC:H04L,H04W,H04Q

Documentation searched other than minimum documentation to the extent that such documents are included in the fields searched

Electronic data base consulted during the international search (name of data base and, where practicable, search terms used)

CNKI, 3GPP, CNTXT, WPABSC, WPABS, DWPI, ENTXTC, ENTXT: 直通链路, 资源分配, 候选资源集合, 无线接入模块, 资源排除, 资源选择窗, 直通链路同步信号, SLSS, 子帧, 逻辑资源预约周期, sideLink, resource allocation, candidate resource set, radio access module, resource exclusion, resource selection window, pass-link synchronization signal, sub-frame, logical resource reservation period

### C. DOCUMENTS CONSIDERED TO BE RELEVANT

| Category* | Citation of document, with indication, where appropriate, of the relevant passages | Relevant to claim No. |
| --- | --- | --- |
| E | CN 117998607 A (CICT CONNECTED AND INTELLIGENT TECHNOLOGIES CO., LTD.) 07 May 2024 (2024-05-07) claims 1-17, and description, pages 8-36 | 1-7, 15-17 |
| PX | CN 116801415 A (SAMSUNG ELECTRONICS CO., LTD.) 22 September 2023 (2023-09-22) description, paragraphs 0009-0317 | 1-7, 15-17 |
| X | WO 2022265388 A1 (LG ELECTRONICS, INC.) 22 December 2022 (2022-12-22) claims 1-20, and description, paragraphs 0034-0228 | 1-17 |
| X | CN 115024004 A (BEIJING XIAOMI MOBILE SOFTWARE CO., LTD.) 06 September 2022 (2022-09-06) description, paragraphs 0003-0287 | 1-7, 15-17 |
| X | INTERDIGITAL, INC. "In-device Coexistence between LTE and NR V2X Sidelinks" *3GPP TSG RAN WG1 #99, R1-1912741*, 22 November 2019 (2019-11-22), sections 1-3 | 1-7, 15-17 |

☑ Further documents are listed in the continuation of Box C.   ☑ See patent family annex.

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
| --- | --- |
| **31 May 2024** | **06 June 2024** |

| Name and mailing address of the ISA/CN | Authorized officer |
| --- | --- |
| **China National Intellectual Property Administration (ISA/CN)** **China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**

| International application No. |
|---|
| **PCT/CN2024/081553** |

| C. | DOCUMENTS CONSIDERED TO BE RELEVANT | |
|---|---|---|
| Category* | Citation of document, with indication, where appropriate, of the relevant passages | Relevant to claim No. |
| A | CN 111865505 A (RESEARCH INSTITUTE OF CHINA MOBILE COMMUNICATIONS CORP. et al.) 30 October 2020 (2020-10-30) entire document | 1-17 |

Form PCT/ISA/210 (second sheet) (July 2022)

## INTERNATIONAL SEARCH REPORT
### Information on patent family members

International application No.

**PCT/CN2024/081553**

| Patent document cited in search report | | | Publication date (day/month/year) | Patent family member(s) | | | Publication date (day/month/year) |
|---|---|---|---|---|---|---|---|
| CN | 117998607 | A | 07 May 2024 | None | | | |
| CN | 116801415 | A | 22 September 2023 | EP | 4250855 | A1 | 27 September 2023 |
| | | | | US | 2023300800 | A1 | 21 September 2023 |
| | | | | TW | 202339529 | A | 01 October 2023 |
| | | | | KR | 20230137248 | A | 04 October 2023 |
| | | | | DE | 102023103035 | A1 | 21 September 2023 |
| | | | | US | 2023300801 | A1 | 21 September 2023 |
| | | | | CN | 116801416 | A | 22 September 2023 |
| | | | | KR | 20230137247 | A | 04 October 2023 |
| WO | 2022265388 | A1 | 22 December 2022 | KR | 20240020713 | A | 15 February 2024 |
| | | | | EP | 4329413 | A1 | 28 February 2024 |
| | | | | CN | 117480844 | A | 30 January 2024 |
| CN | 115024004 | A | 06 September 2022 | WO | 2023206178 | A1 | 02 November 2023 |
| CN | 111865505 | A | 30 October 2020 | None | | | |

Form PCT/ISA/210 (patent family annex) (July 2022)

**REFERENCES CITED IN THE DESCRIPTION**

**Patent documents cited in the description**

• CN 202310362638